# EUROPEAN PATENT SPECIFICATION

(11) **EP 0 655 733 B1**
(45) Date of publication and mention of the grant of the patent: **17.03.1999**
(21) Application number: 94118248.7
(22) Date of filing: 19.11.1994
(51) Int. Cl.: G11B 5/72, G11B 5/64

(54) **Magnetic recording medium and method for producing the same**
Magnetischer Aufzeichnungsträger und Verfahren zu seiner Herstellung
Milieu d'enregistrement magnétique et procédé pour sa fabrication

(30) Priority: 30.11.1993 JP 299682/93; 30.11.1993 JP 299683/93
(43) Date of publication of application: 31.05.1995
(73) Proprietor: TDK Corporation, Chuo-ku, Tokyo-to 103 (JP)
(72) Inventor: Ueda, Kunihiro, Saku, Nagano (JP); Nakayama, Masatoshi, Sakura, Chiba (JP); Yazu, Kiyoshi, Akita (JP); Kobayashi, Koji, Kitasaku-gun, Nagano (JP); Kanazawa, Hiromichi, Saku, Nagano (JP)
(74) Representative: Luderschmidt, Schüler & Partner GbR

(56) References cited:
- EP-A- 0 600 716
- PATENT ABSTRACTS OF JAPAN vol. 13, no. 93 (P-838) 6 March 1989 & JP-A-63 275 040 (SHINOHARA KOICHI) 11 November 1988
- DATABASE WPI Week 8601, Derwent Publications Ltd., London, GB; AN 86-003260 & JP-A-60 229 233 (SUMITOMO SPEC METAL KK) 14 November 1985

## Description

### BACKGROUND OF THE INVENTION

The present invention relates to a method for producing a magnetic recording medium and a magnetic recording medium produced thereby. Particularly it concerns a magnetic recording medium in which a ferromagnetic metal layer serves as a magnetic layer, said ferromagnetic metal layer having corrosion resistance, durability, abrasion resistance and lubricity.

Magnetic recording media in which ferromagnetic metal layers serve as magnetic layers have excellent characteristics such as high saturation magnetic flux density and coercive force.

Previously, various magnetic recording media and methods for producing the same have been proposed to improve the corrosion resistance, durability, abrasion resistance and lubricity of the magnetic recording media in which the ferromagnetic metal layers serve as the magnetic layers.

For example, Japanese Patent Unexamined Publication No. 4-341918 discloses a magnetic recording medium in which a ferromagnetic metal thin film serves as a magnetic layer, the magnetic recording medium comprising an undercoat layer, a ferromagnetic metal film and a topcoat layer on a non-magnetic resin substrate, the undercoat layer and the topcoat layer each containing C and H, and being plasma-polymerized films having a refractive index of 1.8 or more, and Japanese Patent Unexamined Publication No. 5-20663 discloses a magnetic recording medium in which the undercoat layer is a plasma-polymerized film containing Si or Si and O, and the topcoat layer is a plasma-polymerized film containing C and H. Japanese Patent Examined Publication No. 5-33456 discloses a magnetic recording medium comprising a substrate, a magnetic layer formed on the substrate and a protective layer formed on the magnetic layer, the protective layer comprising a hard carbon layer and a fluorine-containing lubricating oil layer, and Japanese Patent Unexamined Publication No. 57-135443 discloses a magnetic recording medium in which a vapor stream of a magnetic substance is obliquely incident on a surface of a substrate to deposit a magnetic thin film, and immediately thereafter, an organic substance is plasma polymerized on the deposited magnetic film to provide an overcoat thin-film layer. Japanese Patent Unexamined Publication No. 57-164432 discloses a magnetic recording medium in which an organic polymer layer is formed on an oblique deposition type metal magnetic layer, and a higher fatty acid or ester layer is formed thereon, the organic polymer layer and the higher fatty acid or ester layer being formed by vacuum deposition, ion plating, sputtering or plasma polymerization, and Japanese Patent Examined Publication No. 3-53691 discloses a magnetic recording medium in which a surface of a magnetic layer is coated with a plasma-polymerized thin film with a thickness of 0.5 to 100 nm (5 to 1000 Å) having siloxane bonds.

However, for the prior-art magnetic recording media described in Japanese Patent Unexamined Publication Nos. 4-341918 and 5-20663, the protective layers are insufficient in adhesive property and corrosion resistance. Further, the magnetic recording medium described in Japanese Patent Examined Publication No. 5-33456 has the disadvantage of rusting away because of lack of an undercoat layer. The magnetic recording medium described in Japanese Patent Unexamined Publication No. 57-135443 in which the organic substance is plasma polymerized on the magnetic layer, and the magnetic recording medium described in Japanese Patent Unexamined Publication No. 57-164432 in which the higher fatty acid or ester is plasma polymerized on the magnetic layer are not sufficient in corrosion resistance, lubricity and abrasion resistance yet. Furthermore, the magnetic recording medium described in Japanese Patent Examined Publication No. 3-53691 (Japanese Patent No. 1687307) in which the magnetic layer is coated with the plasma-polymerized film having siloxane bonds has no undercoat layer, resulting in formation of rust, and is also poor in abrasion resistance.

Accordingly, a magnetic recording medium having corrosion resistance, abrasion resistance, friction resistance, durability and lubricity in combination has been desired.

### SUMMARY OF THE INVENTION

In order to solve the above-mentioned problems, the present inventors have conducted intensive investigation. As a result, the present inventors have discovered that the problems can be solved (1) when a magnetic recording medium structurally comprises an SiOx film, a magnetic layer, a protective layer (DLC film) and further a lubricating layer formed on a substrate, said DLC film which is the protective layer being a plasma-polymerized hydrogen-containing carbon film having a specified refractive index and contact angle and formed by applying a negative bias to a base to adjust the frequency AF on the electrode side to a specified value, said lubricating layer being formed of a specified fluorine compound, and (2) when a magnetic recording medium structurally comprises an SiOx film, a magnetic layer, an SiOx film, a protective layer (DLC film) and further a lubricating layer formed on a substrate, said DLC film which is the protective layer being a plasma-polymerized hydrogen-containing carbon film having a specified refractive index and contact angle and formed by applying a negative bias to a base to adjust the frequency AF on the electrode side to a specified value, said lubricating layer being formed of a specified fluorine compound, thus completing the present invention.

The present invention provides (1) a magnetic recording medium comprising an undercoat layer, a ferromagnetic metal layer, a protective layer and a lubricating layer formed on a non-magnetic substrate in this order, wherein said protective layer is a plasma-polymerized hydrogen-containing carbon film (DLC film) having a refractive index of 1.90 or more, a film thickness of 3 to 15 nm (30 to 150 Å) and a contact angle of less than 80 degrees, said undercoat layer is a film formed of silicon oxide represented by SiOx (x = 1.8-1.95), and said lubricating layer is formed of a compound selected from the group consisting of polar perfluoropolyethers, non-polar perfluoropolyethers, perfluorocarboxylic acids, phosphazenes, perfluoroalkylates and perfluoroacrylate compounds; and (2) a magnetic recording medium comprising an undercoat layer, a ferromagnetic metal layer, an intercepting layer, a protective layer and a lubricating layer formed on a non-magnetic substrate in this order, wherein said protective layer is a plasma-polymerized hydrogen-containing carbon film (DLC film) having a refractive index of 1.90 or more and a contact angle of less than 80 degrees, said undercoat layer and said intercepting layer are films formed of silicon oxide represented by SiOx (x = 1.8-1.95), the total film thickness of said protective layer and said intercepting layer is 3 to 15 nm (30 to 150 Å), and said lubricating layer is formed of a compound selected from the group consisting of polar perfluoropolyethers, non-polar perfluoropolyethers, perfluorocarboxylic acids, phosphazenes, perfluoroalkylates and perfluoroacrylate compounds. In the magnetic recording medium described in (1) or (2), said ferromagnetic metal layer is preferably formed by vapor deposition. The method for producing the magnetic recording medium described in (1) comprises forming an undercoat layer of silicon oxide represented by SiOx (x = 1.8-1.95) on a non-magnetic substrate, forming a ferromagnetic metal layer thereon in a vapor phase, then plasma polymerizing a hydrocarbon gas and hydrogen at a frequency of 50 kHz to 450 kHz while applying a negative bias to a base side to form a protective layer of a hydrogen-containing carbon film having a refractive index of 1.90 or more, a contact angle of less than 80 degrees and a film thickness of 3 to 15 nm (30 to 150 Å), and finally forming a lubricating layer of a compound selected from the group consisting of polar perfluoropolyethers, non-polar perfluoropolyethers, perfluorocarboxylic acids, phosphazenes, perfluoroalkylates and perfluoroacrylate compounds. The method for producing the magnetic recording medium described in (2) comprises forming an undercoat layer of silicon oxide represented by SiOx (x = 1.8-1.95) on a non-magnetic substrate, forming a ferromagnetic metal layer thereon in a vapor phase, forming an intercepting layer of a film formed of silicon oxide represented by SiOx (x = 1.8-1.95) by plasma polymerization, then plasma polymerizing a hydrocarbon gas and hydrogen at a frequency of 50 kHz to 450 kHz while applying a negative bias to a base side to form a protective layer of a hydrogen-containing carbon film having a refractive index of 1.90 or more and a contact angle of less than 80 degrees, adjusting the total film thickness of the protective layer and the intercepting layer to 3 to 15 nm (30 to 150 Å), and finally forming a lubricating layer of a compound selected from the group consisting of polar perfluoro-polyethers, non-polar perfluoropolyethers, perfluoro-carboxylic acids, phosphazenes, perfluoroalkylates and perfluoroacrylate compounds. In the methods described above preferably the negative bias is a pulse bias, the pulse duty factor (ON/OFF ratio) is 0.3 to 3, and the frequency is 10 Hz to 500 Hz; and in the methods described above preferably the formation of the ferromagnetic metal layer in the vapor phase is vapor deposition.

### BRIEF DESCRIPTION OF THE DRAWING

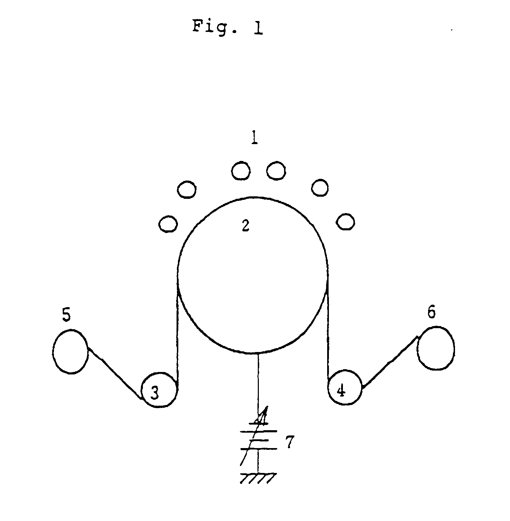

Fig. 1 is a schematic side view showing an apparatus for producing a DLC film used in the present invention. In the figure, the reference numeral 1 designates electrodes, the reference numeral 2 designates a rotating drum, the reference numerals 3 and 4 designate guide rolls, respectively, the reference numeral 5 designates a tape take-up roll, the reference numeral 6 designates a tape unwinding roll, and the reference numeral 7 designates a power supply for a DC bias.

### DESCRIPTION OF THE PREFERRED EMBODIMENTS

In this invention, the plasma-polymerized hydrogen-containing carbon film having a refractive index of 1.90 or more and a contact angle of less than 80 degrees is used as the protective layer, said film being formed by plasma polymerization by applying an audio frequency (AF) of 50 kHz to 450 kHz to the electrode side and a negative bias to the base side.

The plasma polymerization can be conducted by known methods, for example, the method described in Japanese Patent Examined Publication No. 3-53691. A vacuum chamber in which electrodes are arranged is evacuated to 1.33 · 10⁻⁶ mbar (10⁻⁶ Torr), and definite amounts of a raw material gas and a hydrogen gas are introduced thereinto by use of a mass flow controller. After maintenance at a specified pressure, an electrical discharge is generated with an AF power supply, and a running system of a tape is controlled to give a required film thickness. In preparing the DLC film, a DC bias is applied to an electrode on the base side. Then, the vacuum is broken, and the resulting sample on which a polymerized film is formed is taken out.

As the raw materials for the plasma-polymerized hydrogen-containing carbon film as the protective layer, various gases containing carbon and hydrogen can be used. Usually, one or more of methane, ethane, propane, butane, pentane, ethylene, propylene, butene, butadiene, acetylene, methylacetylene, and other saturated and unsaturated hydrocarbons which are gaseous at ordinary temperature are used as carbon and hydrogen sources because of their good operability.

When the hydrocarbon gas is plasma polymerized, an audio frequency of 50 kHz to 450 kHz is applied. An audio frequency of less than 50 kHz approaches direct current (DC) in properties. Hence, discharges become unstable as the films are overlapped on the periphery according to long-term operation, which causes abnormal film quality. In addition, great damage due to ions causes damaged properties of the tape. Further, an audio frequency exceeding 450 kHz causes sluggish movement of ions, resulting in soft film quality. The resulting film is therefore poor in durability.

As to the negative bias, a negative potential is applied by DC. A pulse bias is preferably used. As the bias, there is also an RF bias. However, although the RF bias produces a negative potential, the negative potential is partially reversed to a positive potential. Accordingly, the entirely negative potential is not necessarily obtained. The experiment proved that this case was little different in properties from the case that no bias was applied.

Even when the DC bias is merely applied, the effect is manifested. However, when the DC bias is further pulsed, the sufficient bias effect is obtained even through an insulator for further improvement.

The pulse duty factor (ON/OFF ratio) is preferably 0.3 to 3. A pulse duty factor of less than 0.3 causes unstable discharges, and a pulse duty factor exceeding 3 results in no difference from the case that the DC is applied as a continuous wave (CW). The pulse duty factor is further desirably about 0.8 to 1.5.

Further, the frequency is preferably 10 Hz to 500 Hz. If the frequency is less than 10 Hz, the bias applying effect is not obtained. If the frequency exceeds 500 Hz, the film is not hardened because of its high-frequency behavior.

The refractive index of the plasma-polymerized hydrogen-containing carbon film in the present invention is 1.9 or more. A refractive index of less than 1.9 results in a significant decrease in durability and also deterioration of keeping characteristics. This is because the film hardness is lowered and a decrease in film density allows water to easily pass through the film.

The reason for this is that the increased content of hydrogen in the film makes it impossible to form a crosslinked structure.

The plasma-polymerized hydrogen-containing carbon film of the magnetic recording medium of (1) mentioned above of the present invention has a film thickness of 3 to 15 nm (30 to 150 Å). If the film thickness is less than 3 nm (30 Å), the effect is not manifested. If the film thickness exceeds 15 nm (150 Å), the electromagnetic characteristics of the deposited tape itself is affected because of the great spacing loss. Further, the contact angle thereof is less than 80 degrees. If the contact angle shows a value of 80 degrees or more, the still characteristics are not improved because of insufficient production of C=C on a surface of the film. With respect to such a film having a refractive index of 1.90 or more and a contact angle of less than 80 degrees, the methyl-methylene absorption appearing at 2,900 cm⁻¹ in FT-IR is little observed.

The total film thickness of the plasma-polymerized hydrogen-containing carbon film and the intercepting layer of the magnetic recording medium of (2) mentioned above of the present invention is 3 to 15 nm (30 to 150 Å). If the film thickness is less than 3 nm (30 Å), the effect is not manifested. If the film thickness exceeds 15 nm (150 Å), the electromagnetic characteristics of the deposited tape itself is affected because of the great spacing loss. Further, the contact angle thereof is less than 80 degrees. If the contact angle shows a value of 80 degrees or more, the still characteristics are not improved because of insufficient production of C=C on a surface of the film. With respect to such a film having a refractive index of 1.90 or more and a contact angle of less than 80 degrees, the methyl-methylene absorption appearing at 2,900 cm⁻¹ in FT-IR is little observed.

The undercoat layer of the magnetic recording medium of (1) mentioned above is a film formed of silicon oxide represented by SiOx (X = 1.8-1.95). In silicon oxide wherein x is less than 1.8, carbon is left in the film, so that the density is not increased. Hence, the water-intercepting property is not manifested. Silicon oxide wherein x exceeds 1.95 is also insufficient in water-intercepting property not to function as a water-intercepting layer. As a result of electron spectroscopy for chemical analysis (ESCA), the film formed of silicon oxide wherein x is less than 1.8 contains 15 atomic % of unreacted carbon atoms based on all atoms, whereas the film formed of silicon oxide wherein x is 1.8 or more contains less than 1 atomic % of unreacted carbon atoms because the reaction sufficiently proceeds. It becomes clear that the carbon content has a significant effect on water-intercepting property.

The undercoat layer and the intercepting layer of the magnetic recording medium of (2) mentioned above are films formed of silicon oxide represented by SiOx (X = 1.8-1.95). In silicon oxide wherein x is less than 1.8, carbon is left in the film, so that the density is not increased. Hence, the water-intercepting property is not manifested. Silicon oxide wherein x exceeds 1.95 is also insufficient in water-intercepting property not to function as a water-intercepting layer. As a result of electron spectroscopy for chemical analysis (ESCA), the film formed of silicon oxide wherein x is less than 1.8 contains 15 atomic % of unreacted carbon atoms based on all atoms, whereas the film formed of silicon oxide wherein x is 1.8 or more contains less than 1 atomic % of unreacted carbon atoms because the reaction sufficiently proceeds. It becomes clear that the carbon content has a significant effect on water-intercepting property.

The film formed of silicon oxide represented by SiOx (x = 1.8-1.95) is prepared by evacuating a vacuum chamber to 1.33·10⁻⁶ mbar (10⁻⁶ Torr), then, introducing definite amounts of a raw material gas and an oxygen gas thereinto by use of a mass flow controller, and generating plasma with an AF power supply. In the case of the DLC film, the DC bias is applied. For the SiOx film, however, the bias is not particularly necessary though it may be applied, with the proviso that the introducing flow ratio of the raw material silane series gas to the oxygen gas (Si/O₂) is required to be 1/3. If the oxygen flow rate is less than this ratio, the film formed of silicon oxide wherein x is 1.8 or more can not be obtained.

The silane series gases used as the raw materials include silane, trimethylsilane, tetramethylsilane, trimethoxysilane, tetramethoxysilane and tetraethoxysilane. From the viewpoint of handling, the materials which are liquid under the standard conditions of 0°C and 1 atm. are easily handled. As to the boiling point, the materials having a boiling point of about 100°C are easily handled. The liquid raw materials may be supplied through a mass flow controller by use of a commercial liquid feeder.

The lubricating layer is formed by applying a solution of a compound selected from the group consisting of polar perfluoropolyethers, non-polar perfluoropolyethers, perfluorocarboxylic acids, phosphazenes, perfluoroalkylates and perfluoroacrylate compounds in a solvent. Usually, there is no particular restriction on coating methods, as long as they are methods used for coating of the magnetic recording media, such as gravure coating, reverse coating and die nozzle coating. The concentration of the lubricant based on the solvent is adjusted within 1 to 0.1% by weight.

Examples of the polar perfluoropolyethers include Crytocks (E. I. Du Pont), Z-DOL, AM2001 (Monte Dison) and SA1, SY3 (Daikin Kogyo Co.). Examples of the non-polar perfluoro-polyethers include S20 (Daikin Kogyo Co.), examples of the perfluorocarboxylic acids include n-CₘFₗCOOH (m = 7-10, 1 = 14-21), examples of the perfluoroalkylates include FA108 (Kyoeisha Yushikagaku Kogyo Co.), and examples of the perfluoro-acrylate compounds include n-CₘFₗCOOCₚF_{q} (p = 7-10, q = 14-21, m and l are as defined above).

As the solvents, flon solvents such as L-90, and tributylamine solvents such as EFL-150 (Daikin Kogyo Co.) are used.

Compounds other than these lubricants, for example, saturated carboxylic acids such as stearic acid and myristic acid and silicone oil, do not give the effect. Fluorine lubricants having low surface energy are preferred for the magnetic metal layers.

As the non-magnetic substrates, various usual films are used, as long as they resist heat on vapor deposition of the ferromagnetic metal thin films. Examples of such films include films of polyesters, polyimides, aramides, polysulfones, polyether ether ketone (PEEK). Films of polyethylene terephthalate (PET) and polyethylene naphthalate (PEN) are used.

Metals such as Fe, Co and Ni and various alloys thereof are used in the ferromagnetic metal layers. Co or alloys mainly composed of Co are preferred. The alloys mainly composed of Co include Co-Ni, Co-Fe, Co-Cr, Co-Ni-Cr, Co-Pt-Cr, Co-Cu, Co-Sm and Co-P. The Co-Ni alloys are preferably used, and alloys containing about 80% or more of Co and less than 20% of Ni in molar ratio are particularly preferred. These ferromagnetic metal thin layers are formed by metal thin layer forming methods such as vacuum deposition, ion plating and sputtering. Deposition is preferably used, and oblique deposition is particularly preferred. Oxidative gases such as oxygen may be introduced during formation of the films. The thickness of the magnetic layer is 50 to 300 nm (500 to 3000 Å), and preferably 150 to 200 nm (1500 to 2000 Å).

In the magnetic recording medium having the ferromagnetic metal layer serving as the magnetic layer, (i) the undercoat layer on the ferromagnetic metal layer is the film formed of silicon oxide represented by SiOx (x = 1.8-1.95), and the protective layer is the plasma-polymerized hydrogen-containing carbon film having a refractive index of 1.90 or more, a film thickness of 3 to 15 nm (30 to 150 Å) and a contact angle of less than 80 degrees, which is prepared by plasma polymerization while applying an audio frequency of 50 kHz to 450 kHz to the electrode side and the negative bias to the base side; or (ii) the undercoat layer and the intercepting layer on the ferromagnetic metal layer are the films formed of silicon oxide represented by SiOx (x = 1.8-1.95), the protective layer is the plasma-polymerized hydrogen-containing carbon film having a refractive index of 1.90 or more and a contact angle of less than 80 degrees, which is prepared by plasma polymerization while applying an audio frequency of 50 kHz to 450 kHz to the electrode side and the negative bias to the base side, and the total thickness of the protective layer and the intercepting layer is 3 to 15 nm (30 to 150 Å); and the lubricating layer is formed of a compound selected from the group consisting of polar perfluoropolyethers, non-polar perfluoropolyethers, perfluorocarboxylic acids, phosphazenes, perfluoroalkylates and perfluoroacrylate compounds; whereby the excellent characteristics of the magnetic recording medium having the ferromagnetic metal layer serving as the magnetic layer are maintained, and the corrosion resistance, durability, abrasion resistance and lubricity thereof can be improved.

The present invention is described with reference to the following examples.

The characteristics of the magnetic recording tapes were measured as follows:
(1) Still
   A signal at 7 MHz was recorded under the circumstances of 40°C and 20% RH, and the time required until its output reached -5 dB was measured.
(2) Corrosion Resistance
   Each sample was kept under the circumstances of 60°C and 90% RH for 1 week, and the reduction rate in saturation magnetic flux density was measured.
(3) Initial Friction
   The friction coefficient at the first pass was measured with a 180-degree pin friction tester.
(4) Durable Friction
   The friction coefficient at the 500th passes was measured with a 180-degree pin friction tester.
(5) Surface Observation
   The surface condition of each sample after 200 passes was observed under an optical microscope to examine the degree of scratched state. No scratch is indicated by ○, 1 to 5 scratches by △, and 6 scratches or more by ×.
(6) Electromagnetic Characteristics
   When the output at 7 MHz in Comparative Example 1 given below was taken as 0 dB, a difference in output between the sample in Comparative Example 1 and each sample of less than 2 dB is indicated by ○, and a difference of 2 dB or more by ×.

### A. Magnetic Recording Media of (1)

### Examples 1 to 20 and Comparative Examples 1 to 29

The inside of a chamber was evacuated to 1.33 · 10⁻⁶ mbar (10⁻⁶ Torr), and then, tetramethoxysilane as a raw material and oxygen are introduced thereinto at a ratio of 1:3, followed by adjustment of the pressure to 1.33 · 10⁻² mbar (10⁻² Torr). Then, an audio frequency of 100 kHZ was applied to an electrode to generate plasma discharges and to plasma polymerize SiOx having each of the various compositions shown in Tables 1-1 to 1-5, thereby forming an undercoat layer on a polyethylene terephthalate film substrate having a thickness of 7 µm. The x value in the SiOx film was changed by varying the ratio of oxygen introduced together with the silane series organic compound.

Subsequently, an alloy containing 80% by weight of Co and 20% by weight of Ni was deposited under an oxygen atmosphere to form a ferromagnetic metal layer (with a film thickness of 150 nm (1,500 Å). A protective layer was formed thereon by plasma polymerization using methane as a hydrocarbon source by use of a DLC film producing apparatus shown in Fig. 1. Namely, the inside of a chamber was evacuated to 1.33 · 10⁻⁶ mbar (10⁻⁶ Torr), and then, methane as a raw material and hydrogen are introduced thereinto at a ratio of 1:1, followed by adjustment of the pressure to 0.0133 mbar (10⁻² Torr). Then, electromagnetic waves were applied to electrodes at high frequency to generate plasma discharges. At the same time, a DC bias was applied connecting as shown in Fig. 1.

The protective layer was further coated by gravure coating with a solution prepared by dissolving each of the various lubricants shown in Tables 1-6 to 1-10 in solvent EFL-150 (Daikin Kogyo Co.) in a concentration of 0.3% by weight. The film thickness was about 4 nm (40 Å). As the DC bias on the base side, one having a pulse generation mechanism was used.

S20 (Daikin Kogyo Co.) was used as a non-polar perfluoro-polyether (PFPE), KF-851 (Shinetsu Kagaku kogyo Co.) as silicone oil, SA1 (Daikin Kogyo Co.) as a polar PFPE, n-C₁₀F₂₀COOH as a perfluorocarboxylic acid (PFA), phosphazene (Idemitsu Sekiyu Kagaku Co.) as a phosphazene, FA108 (Kyoeisha Yushikagaku Kogyo Co.) as a perfluoroacrylate, and n-C₁₀F₂₀COOC₁₀F₂₀ as a perfluoroalkylate to form a lubricating layer.

The composition and the film thickness of the SiOx undercoat layers, the plasma frequency and the bias on film formation of the plasma-polymerized hydrogen-containing carbon film protective layers, and the film thickness, the refractive index and the contact angle of the resulting protective layers are shown in Tables 1-1 to 1-5. When the pulse bias is used, the pulse is 50 Hz. Further, for the resulting magnetic recording tapes, the materials of the lubricating layers, the still time, the corrosion resistance, the initial friction, the durable friction, the results of surface observation and the electromagnetic characteristics are shown in Tables 1-6 to 1-10.

The film thickness and the refractive index were measured by ellipsometry. The composition of SiOx was measured by ESCA. The contact angle was measured by a droplet dropping system using a contact angle meter (Kyowa Kaimen Kagaku Co.). For comparison, protective layers were formed using RF (radio frequency:13.56 MHz) and 1 MHz.

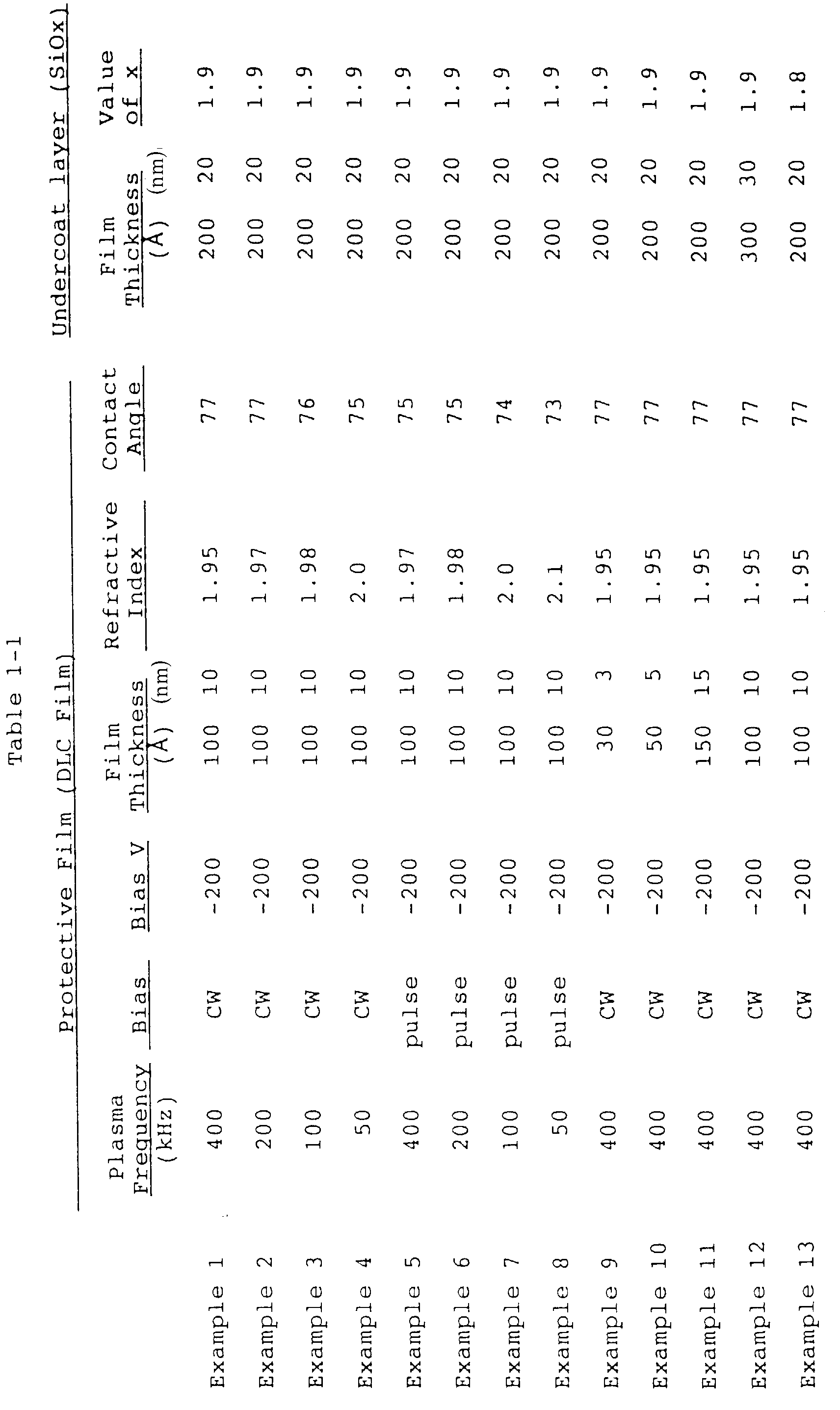

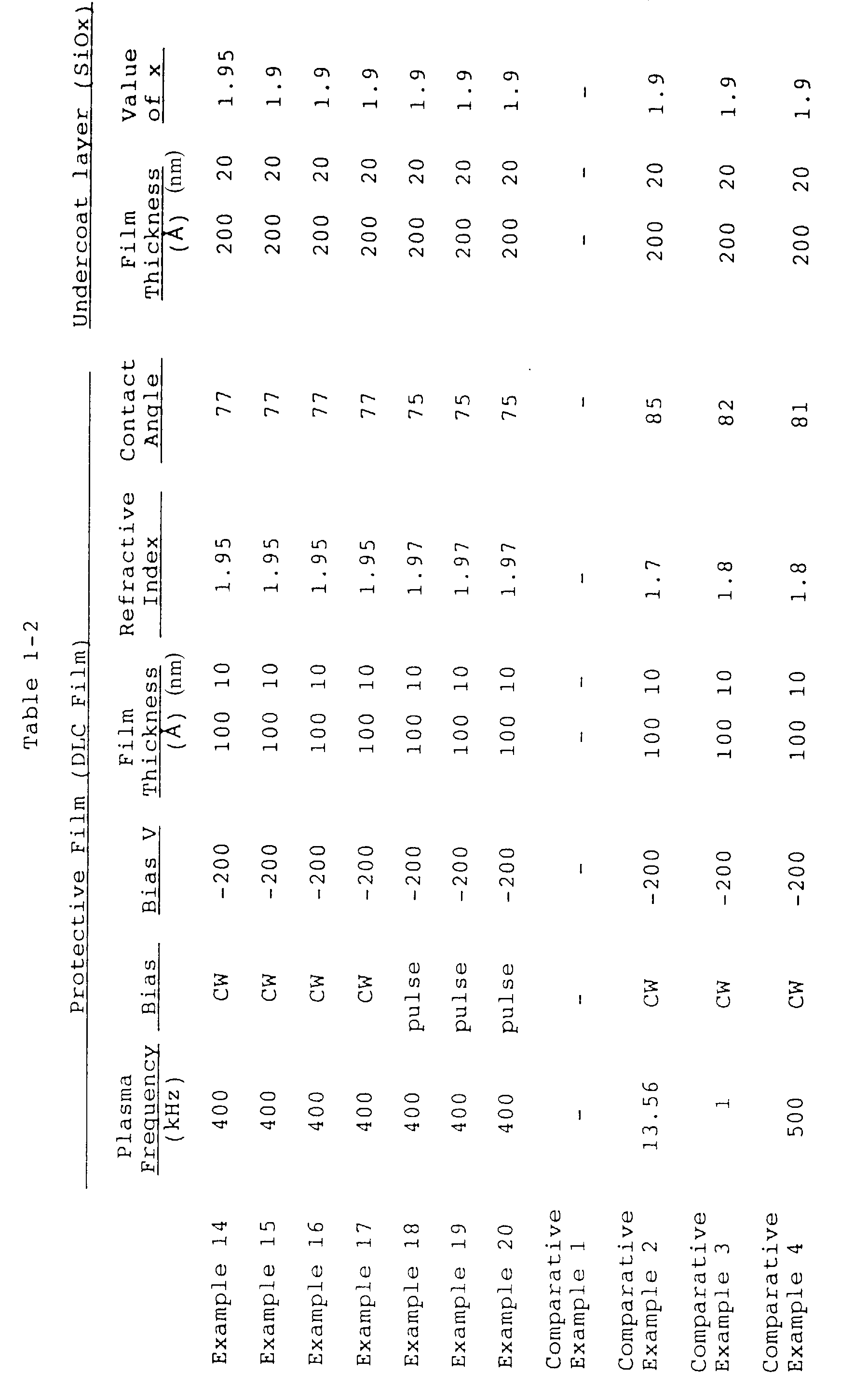

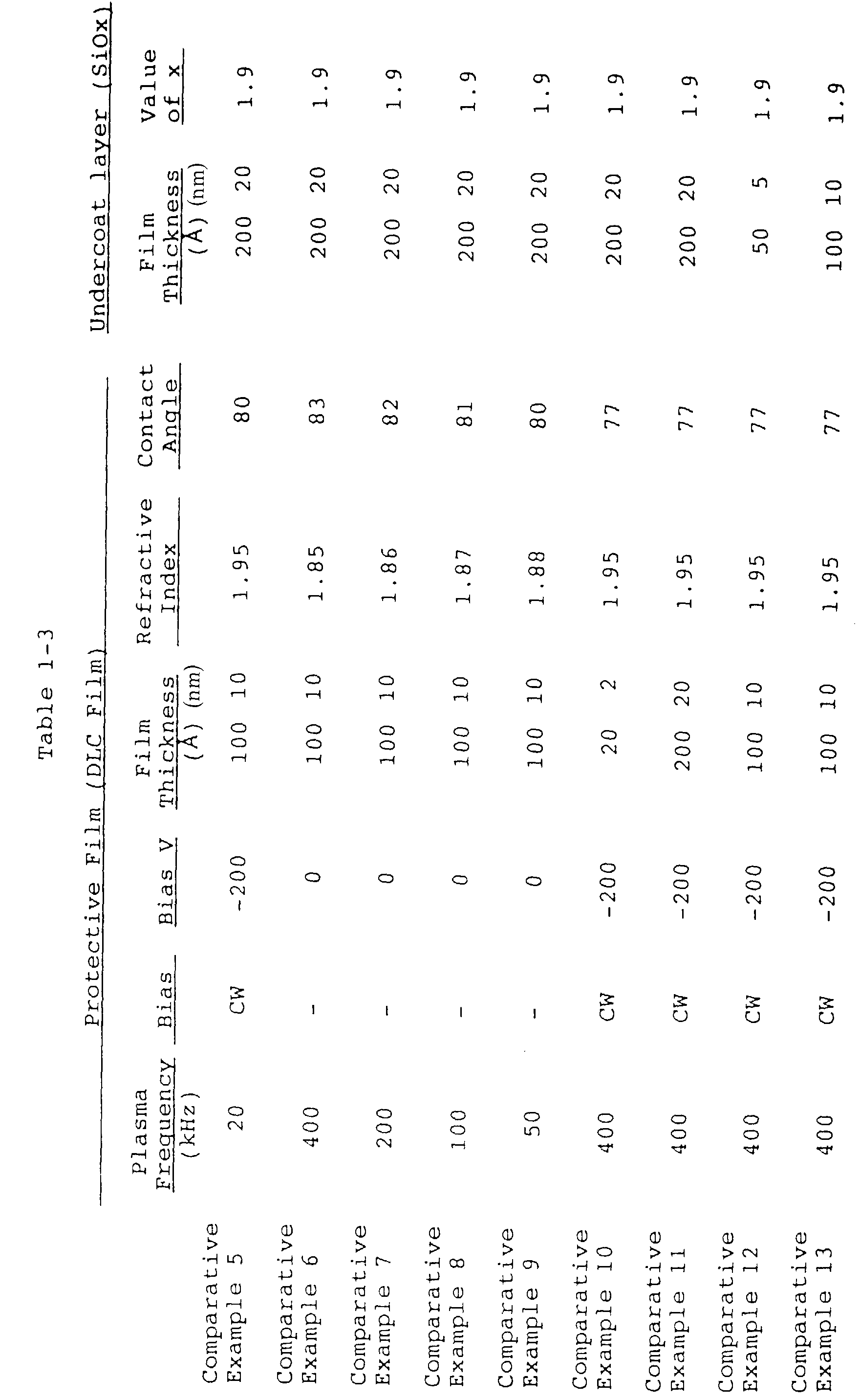

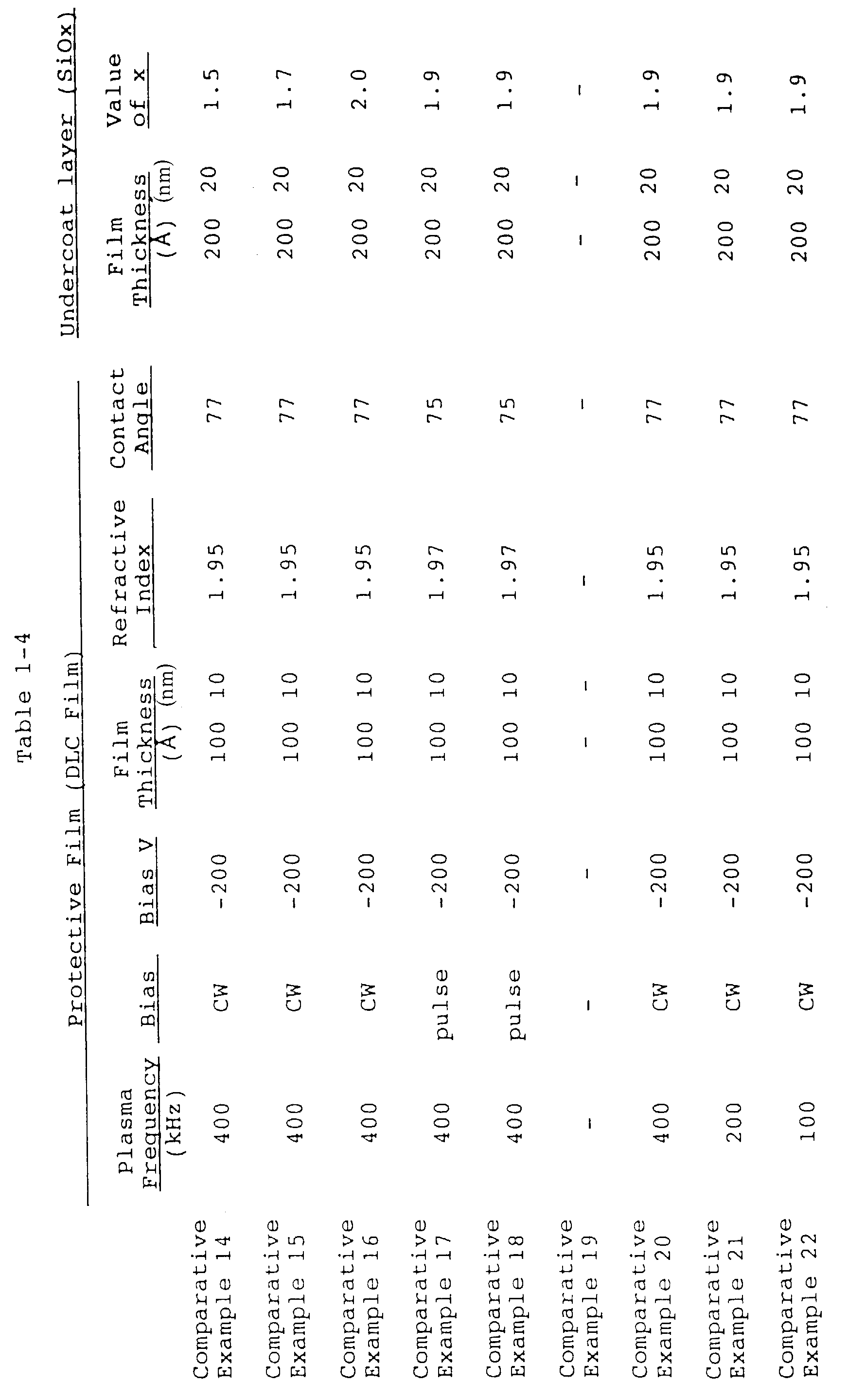

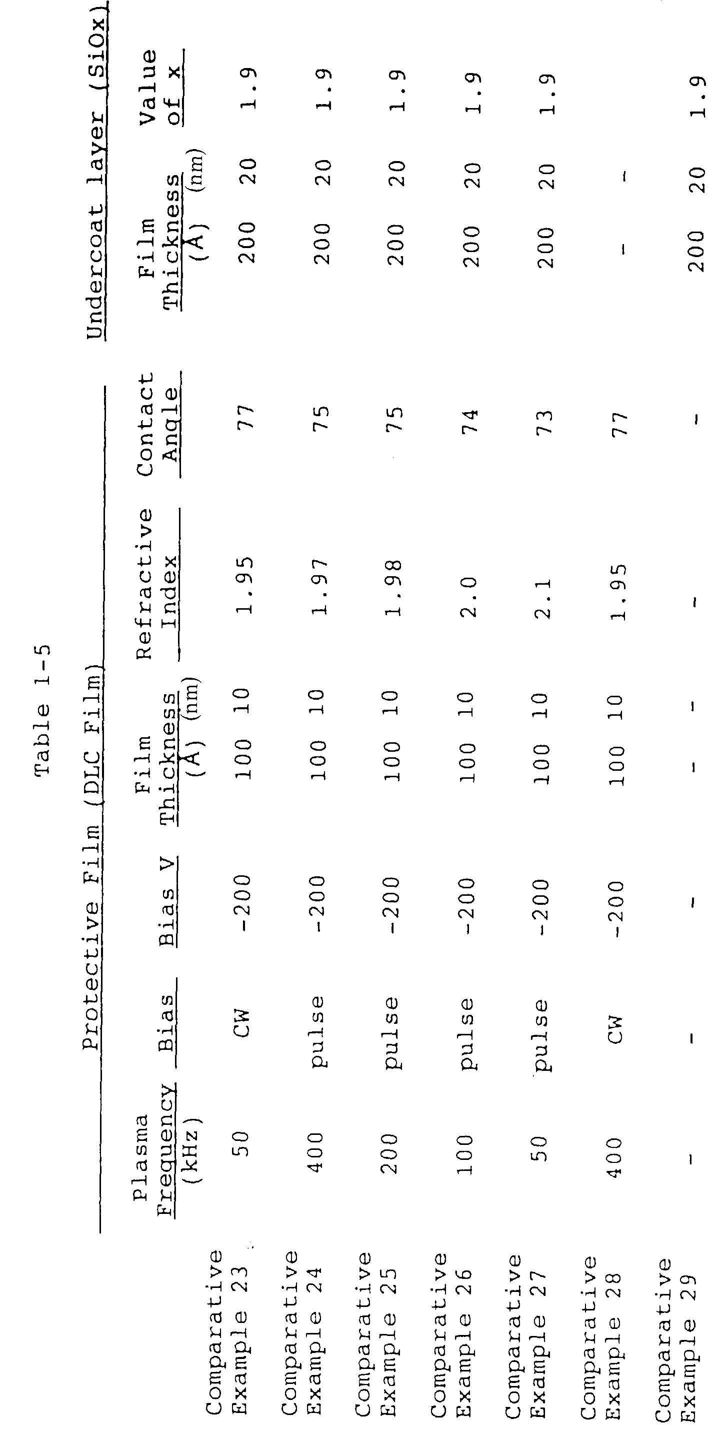

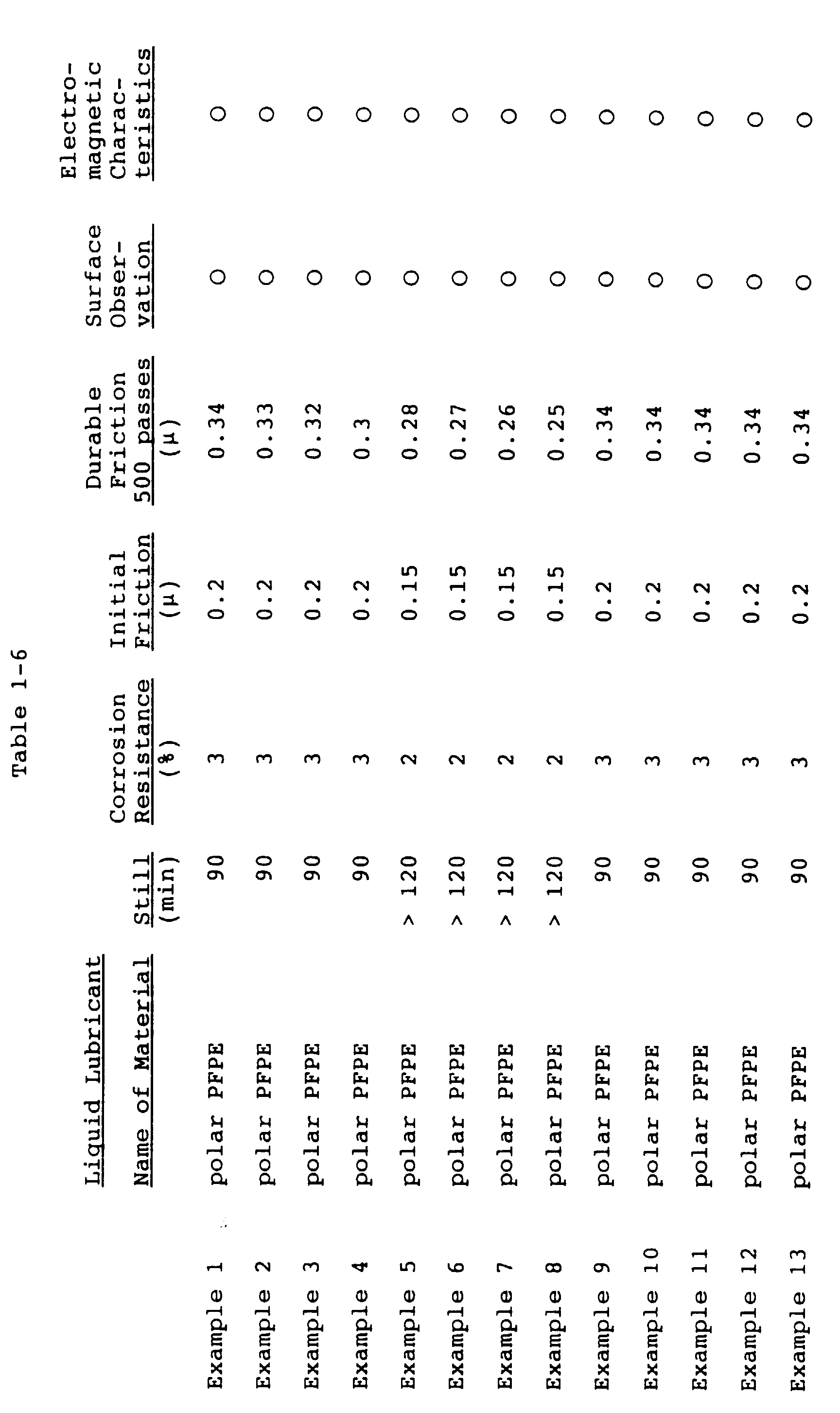

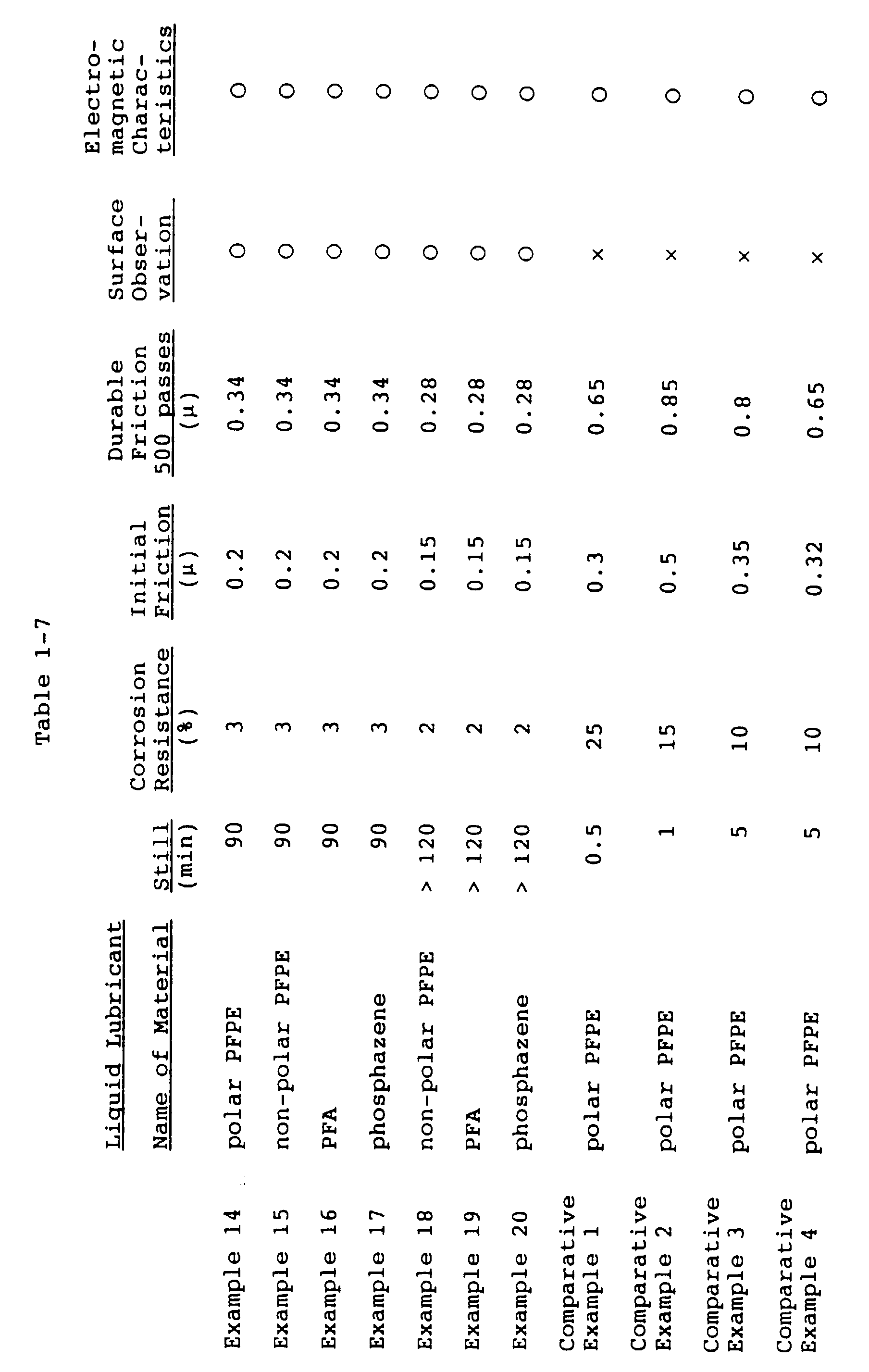

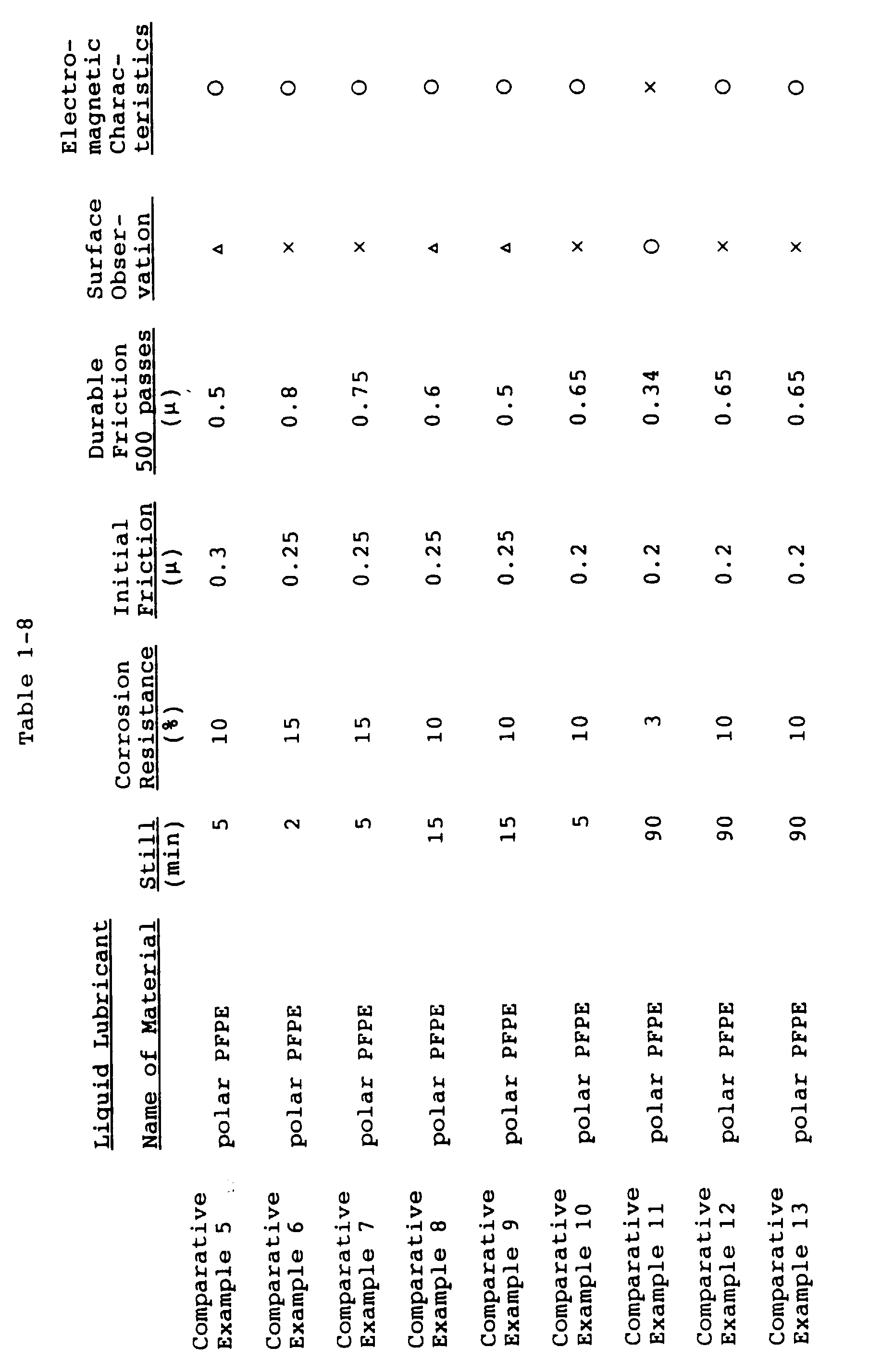

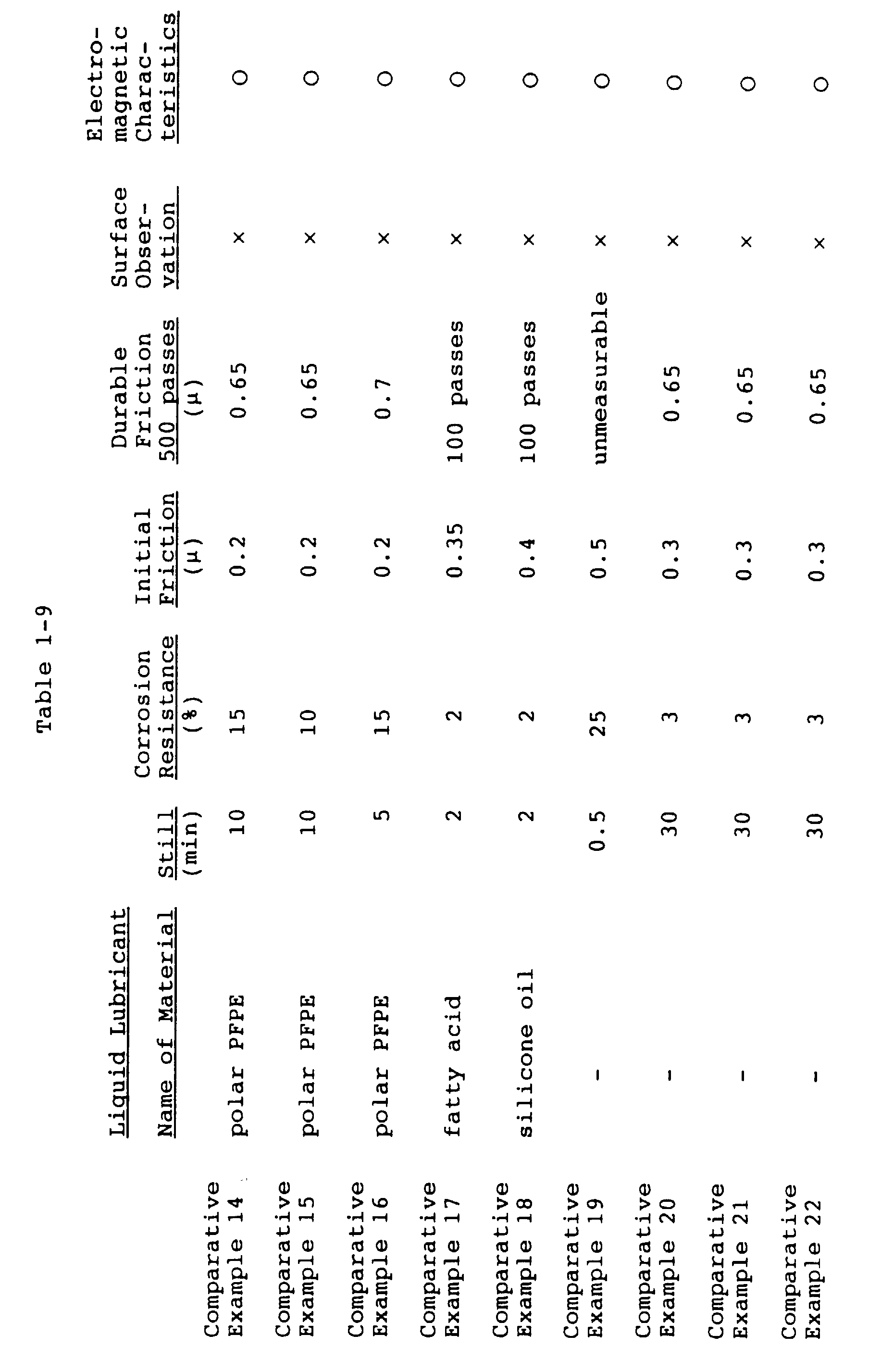

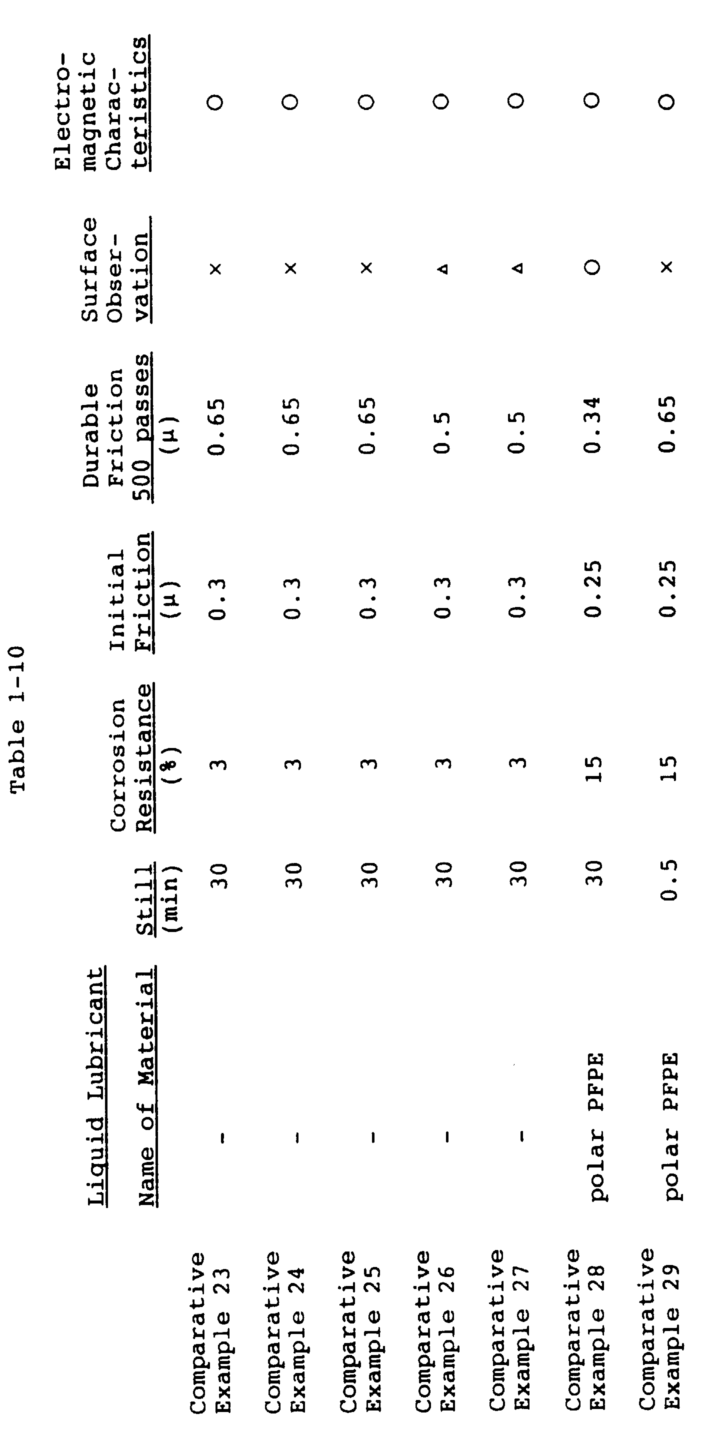

### Examples 21 to 42

SiOx (x = 1.900) was plasma polymerized using a mixture of tetramethoxysilane and oxygen at a discharge frequency of 400 kHz to form an undercoat layer on a polyethylene terephthalate film substrate having a thickness of 7 µm, and an alloy containing 80% by weight of Co and 20% by weight of Ni was deposited thereon under an oxygen atmosphere to form a ferromagnetic metal layer (with a film thickness of 150 nm (1,500 Å)). Each of the various hydrocarbons shown in Tables 2-1 and 2-2 was plasma polymerized to form a protective layer. Further, using a polar perfluoropolyether (PFPE) as a liquid lubricant, a lubricating layer was formed.

The film thickness of the SiOx undercoat layers, the kind of the hydrocarbons, the plasma frequency and the bias on film formation, and the film thickness, the refractive index and the contact angle of the resulting protective layers are shown in Tables 2-1 and 2-2. Further, for the resulting magnetic recording tapes, the still time, the corrosion resistance, the initial friction, the durable friction, the results of surface observation and the electromagnetic characteristics are shown in Tables 2-3 and 2-4.

The film thickness, the refractive index, the composition of SiOx and the contact angle were measured in the same manner as with Examples 1 to 20.

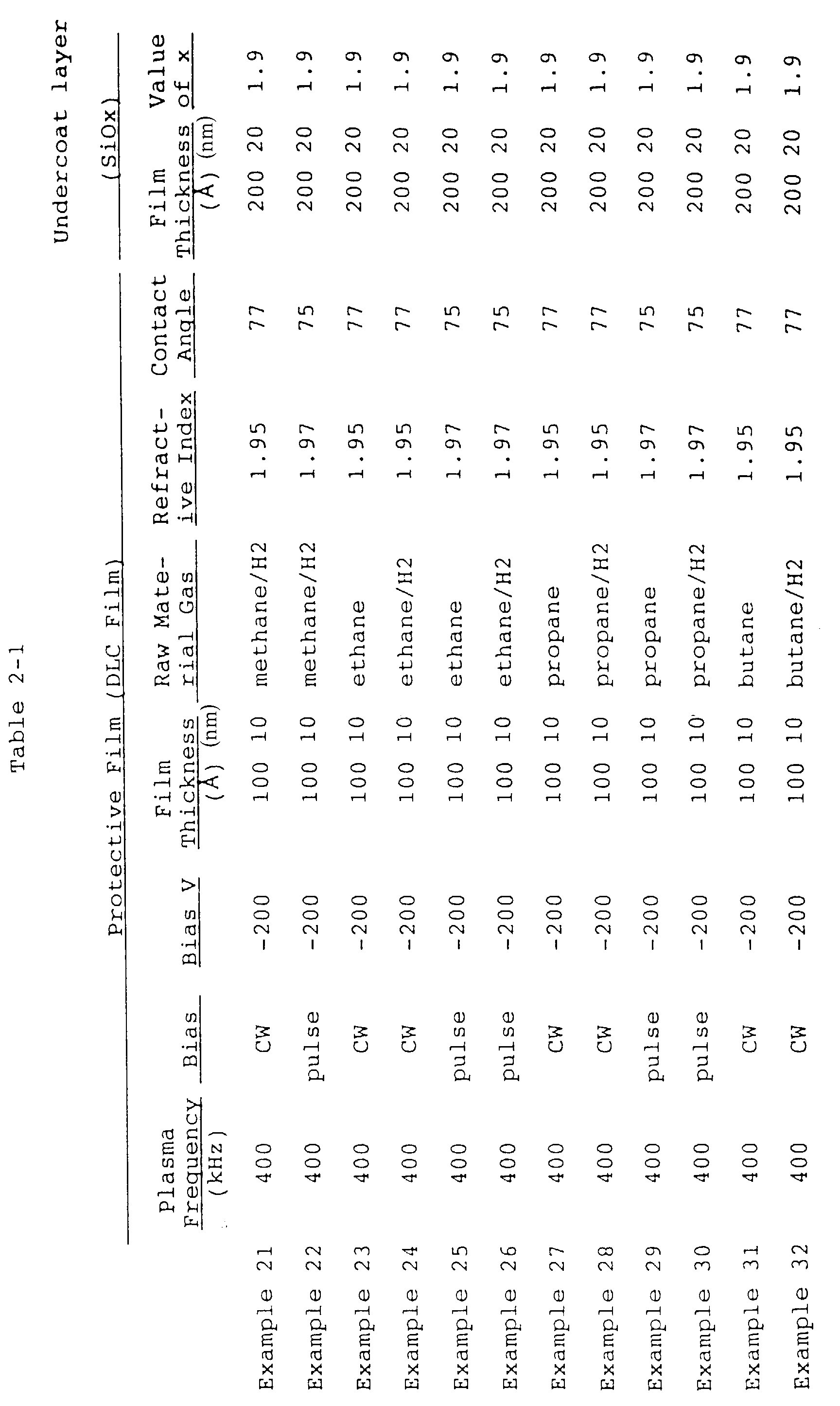

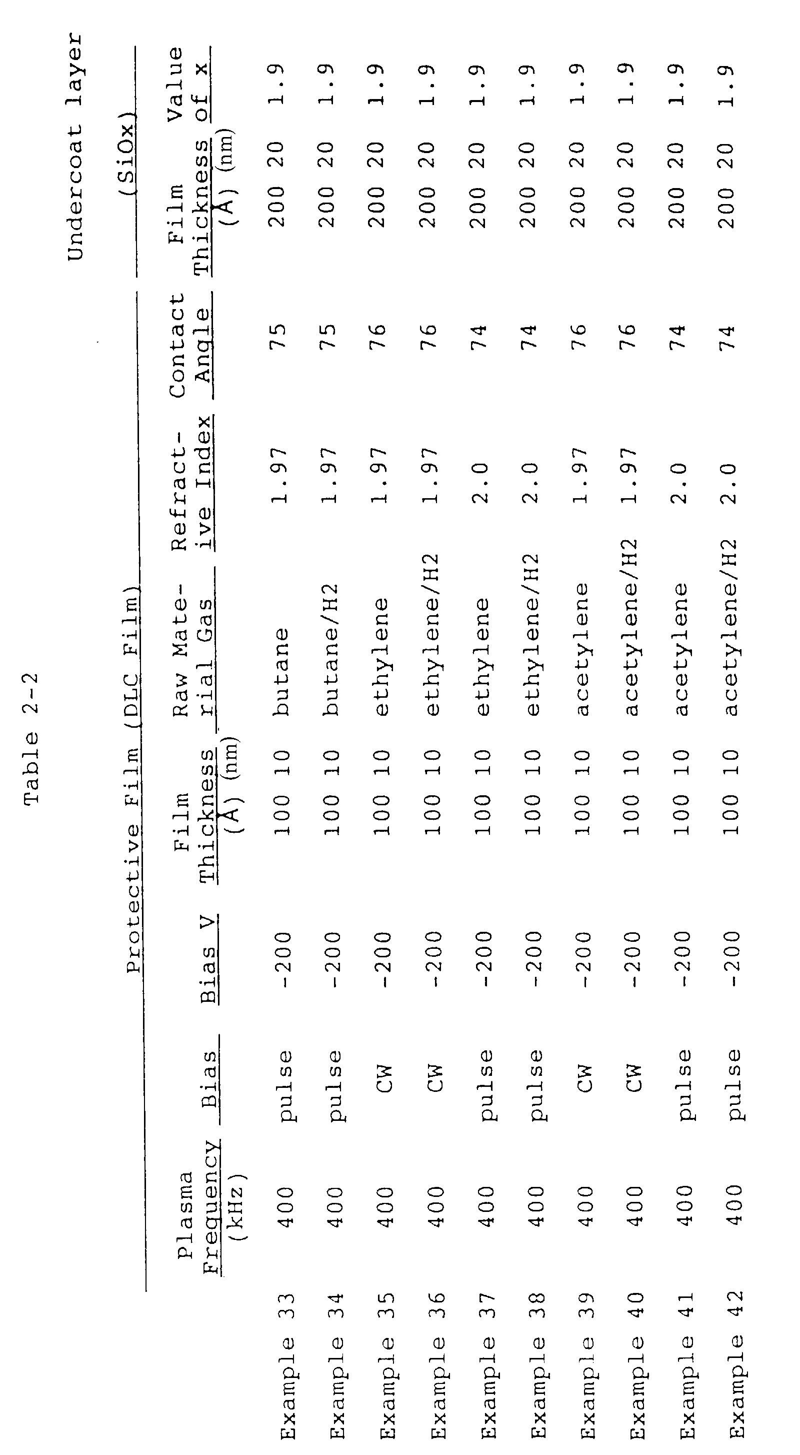

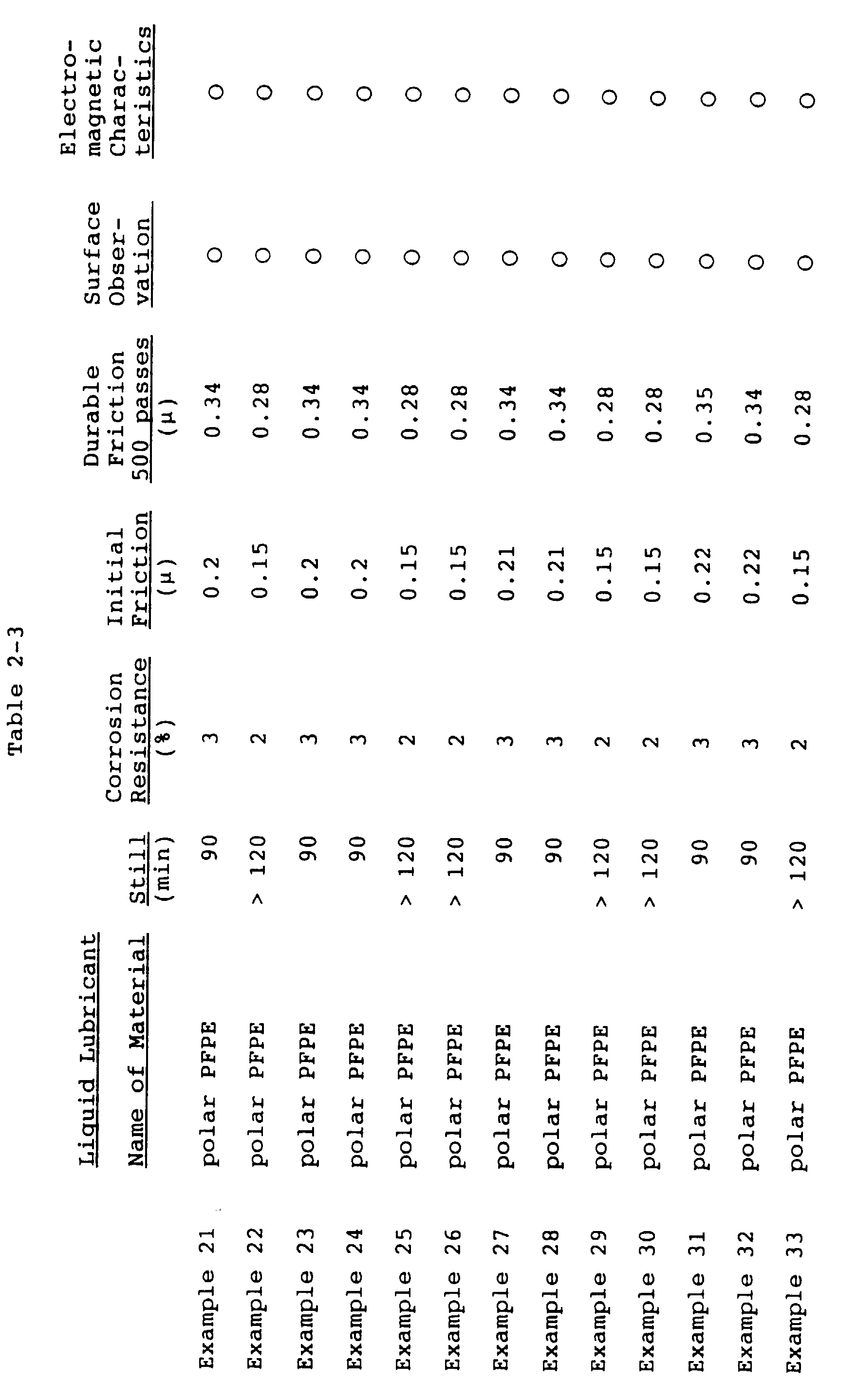

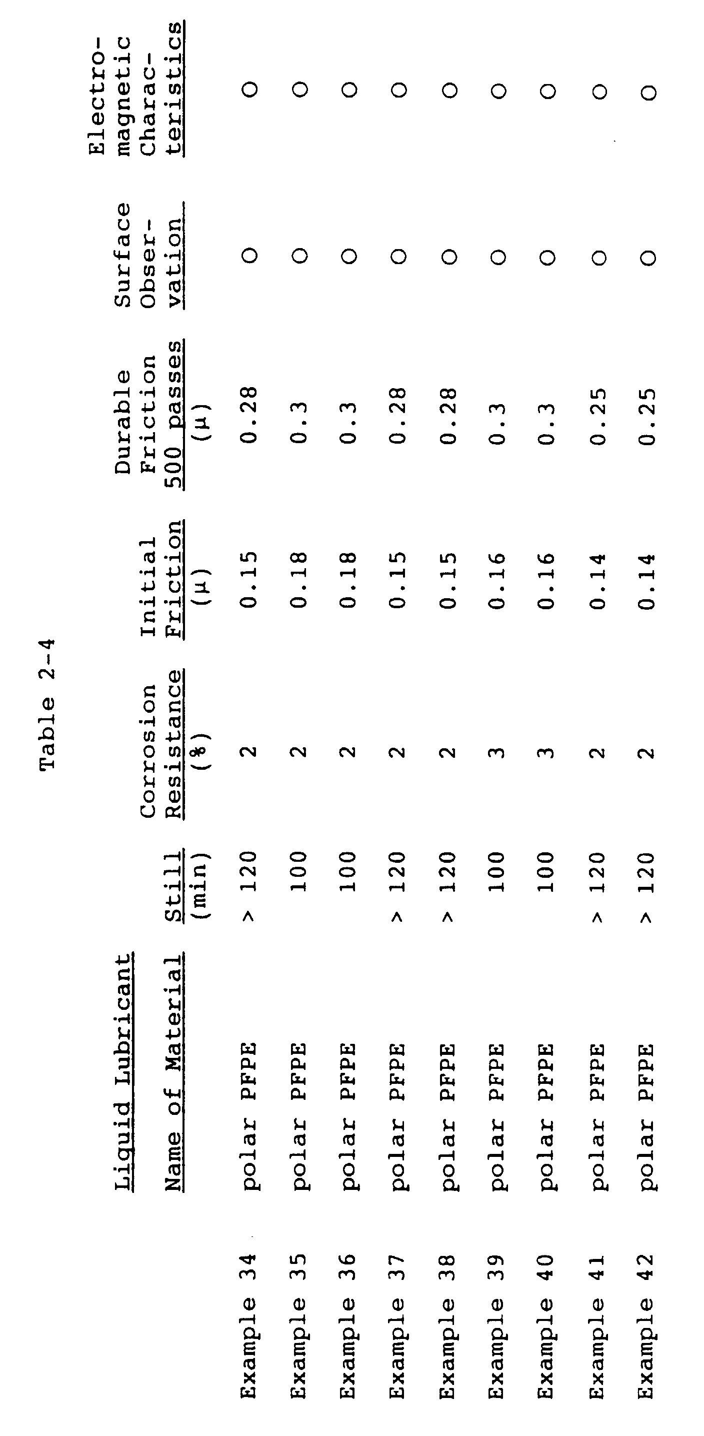

### Examples 43 to 57 and Comparative Examples 30 to 36

Magnetic recording media were produced in the same manner as with the above-mentioned examples with the exception that CW and a pulse bias were used as the negative bias, and that the pulse frequency Hz, the flow ratio of CH₄/H and the pulse ratio ON/OFF were variously changed.

The pulse ratio was changed by setting the ON/OFF time with a setting switch attached to a power supply.

Results are shown in Tables 3-1 to 3-4.

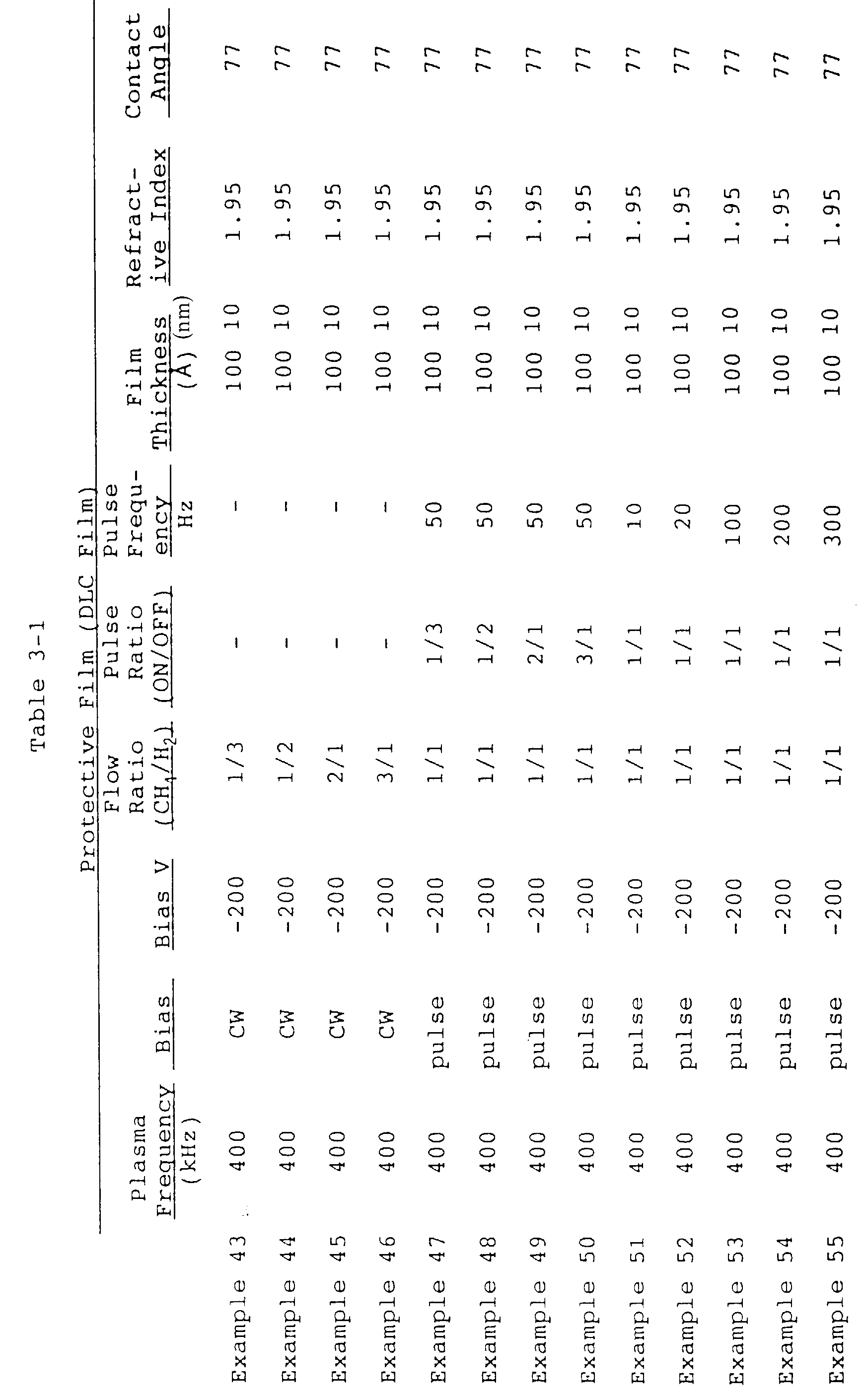

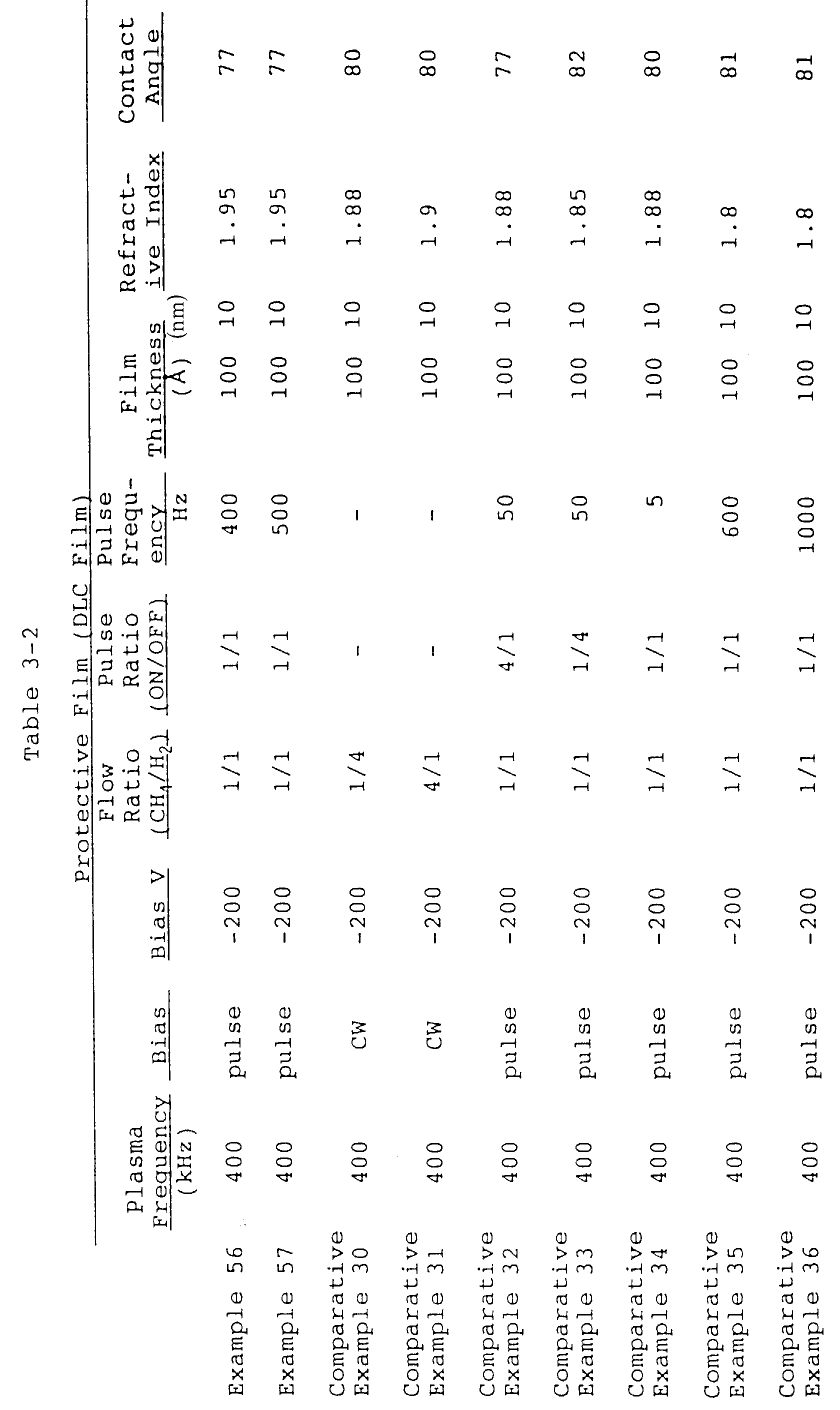

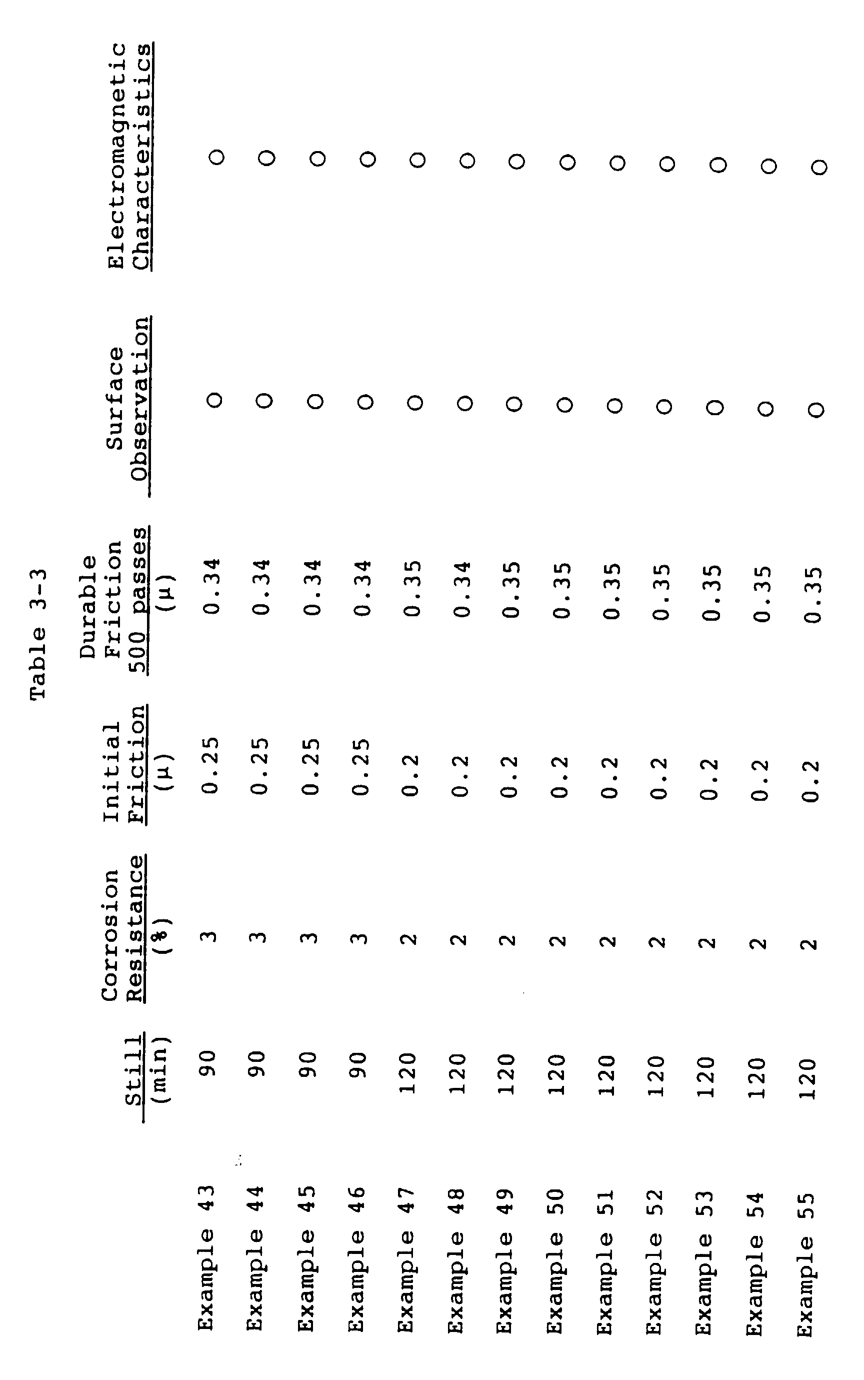

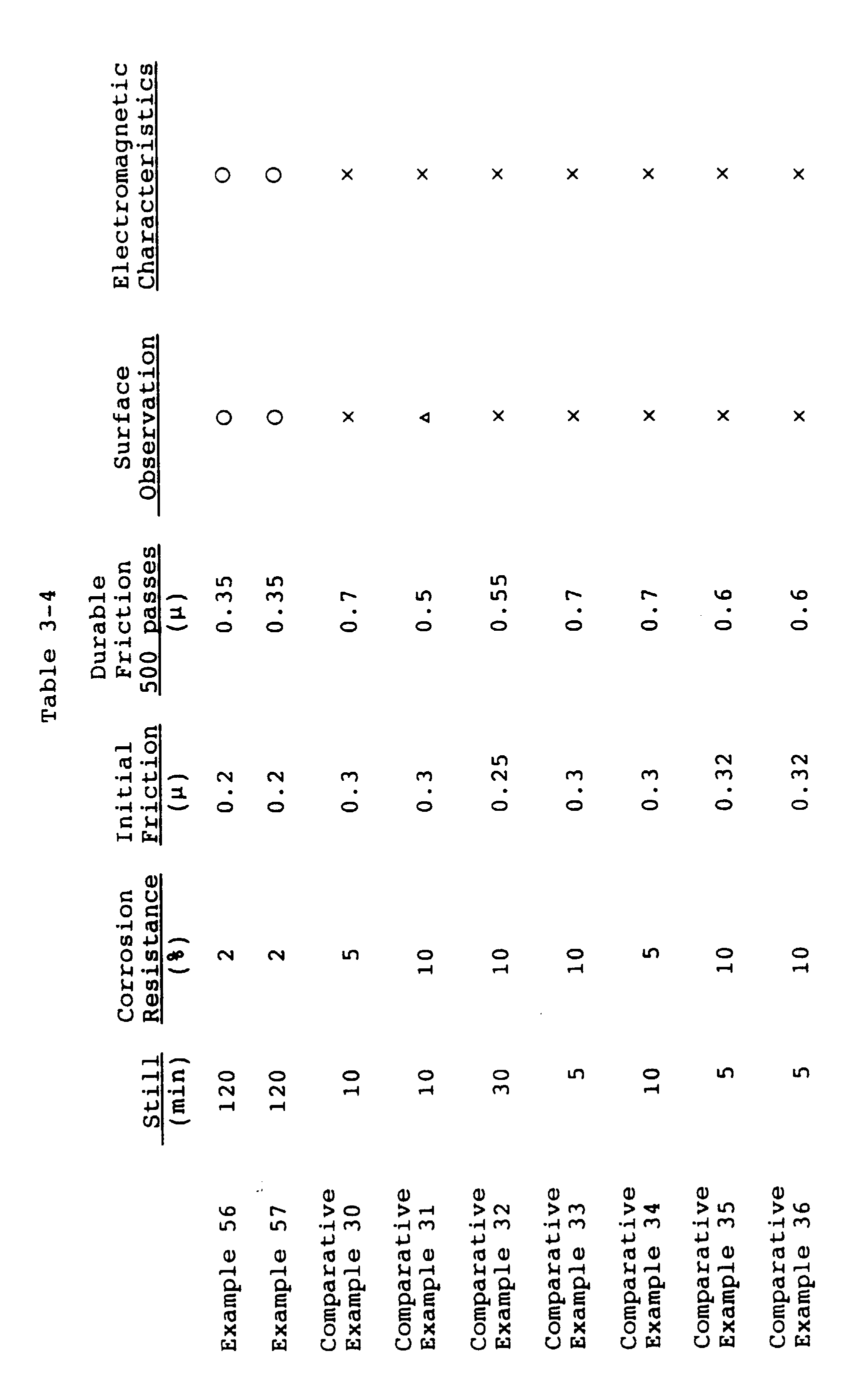

### B. Magnetic Recording Media of (2)

### Examples 58 to 85 and Comparative Examples 37 to 65

The inside of a chamber was evacuated to 1.33 · 10⁻⁶ mbar (10⁻⁶ Torr), and then, tetramethoxysilane as a raw material and oxygen are introduced thereinto at a ratio of 1:3, followed by adjustment of the pressure to 0.0133 mbar (10⁻² Torr). Then, an audio frequency of 100 kHZ was applied to an electrode to generate plasma discharges and to plasma polymerize SiOx having each of the various compositions shown in Tables 4-1 to 4-6, thereby forming an undercoat layer on a polyethylene terephthalate film substrate having a thickness of 7 µm. Subsequently, an alloy containing 80% by weight of Co and 20% by weight of Ni was deposited under an oxygen atmosphere to form a ferromagnetic metal layer (with a film thickness of 150 nm (1,500 Å)), and SiOx having each of the various compositions shown in Tables 4-1 to 4-6 was plasma polymerized thereon in a manner similar to that described above to form a intercepting layer. The x value in the SiOx film was changed by varying the ratio of oxygen introduced together with the silane series organic compound.

Then, a protective layer was formed thereon by plasma polymerization using methane as a hydrocarbon source by use of a DLC film producing apparatus shown in Fig. 1. Namely, the inside of a chamber was evacuated to 1.33 · 10⁻⁶ mbar (10⁻⁶ Torr), and then, methane as a raw material and hydrogen are introduced thereinto at a ratio of 1:1, followed by adjustment of the pressure to 0.0133 mbar (10⁻² Torr). Thereafter, electromagnetic waves were applied to electrodes at high frequency to generate plasma discharges. At the same time, a DC bias was applied connecting as shown in Fig. 1. As the DC bias on the base side, one having a pulse generation mechanism was used.

The protective layer was further coated by gravure coating with a solution prepared by dissolving each of the various lubricants shown in Tables 7 to 12 in solvent EFL-150 (Daikin Kogyo Co.) in a concentration of 0.3% by weight, thereby forming a lubricating layer. The film thickness was about 4 nm (40 Å).

S20 (Daikin Kogyo Co.) was used as a non-polar perfluoro-polyether (PFPE), KF-851 (Shinetsu Kagaku Kogyo Co.) as silicone oil, SA1 (Daikin Kogyo Co.) as a polar PFPE, n-C₁₀F₂₀COOH as a perfluorocarboxylic acid (PFA), phosphazene (Idemitsu Sekiyu Kagaku Co.) as a phosphazene, FA108 as a perfluoroacrylate, and n-C₁₀F₂₀COOC₁₀F₂₀ as a perfluoroalkylate.

The composition and the film thickness of the SiOx undercoat layers, the plasma frequency and the bias on film formation of the hydrogen-containing carbon film protective layers, and the film thickness, the refractive index and the contact angle of the resulting protective layers are shown in Tables 4-1 to 4-6 When the pulse bias is used, the pulse is 50 Hz. Further, for the resulting magnetic recording tapes, the materials of the lubricating layers, the still time, the corrosion resistance, the initial friction, the durable friction, the results of surface observation and the electromagnetic characteristics are shown in Tables 4-7 to 4-12.

The film thickness and the refractive index were measured by ellipsometry. The composition of SiOx was measured by ESCA. The contact angle was measured by a droplet dropping system using a contact angle meter (Kyowa Kaimen Kagaku Co.). For comparison, protective layers were formed using RF and 1 MHz.

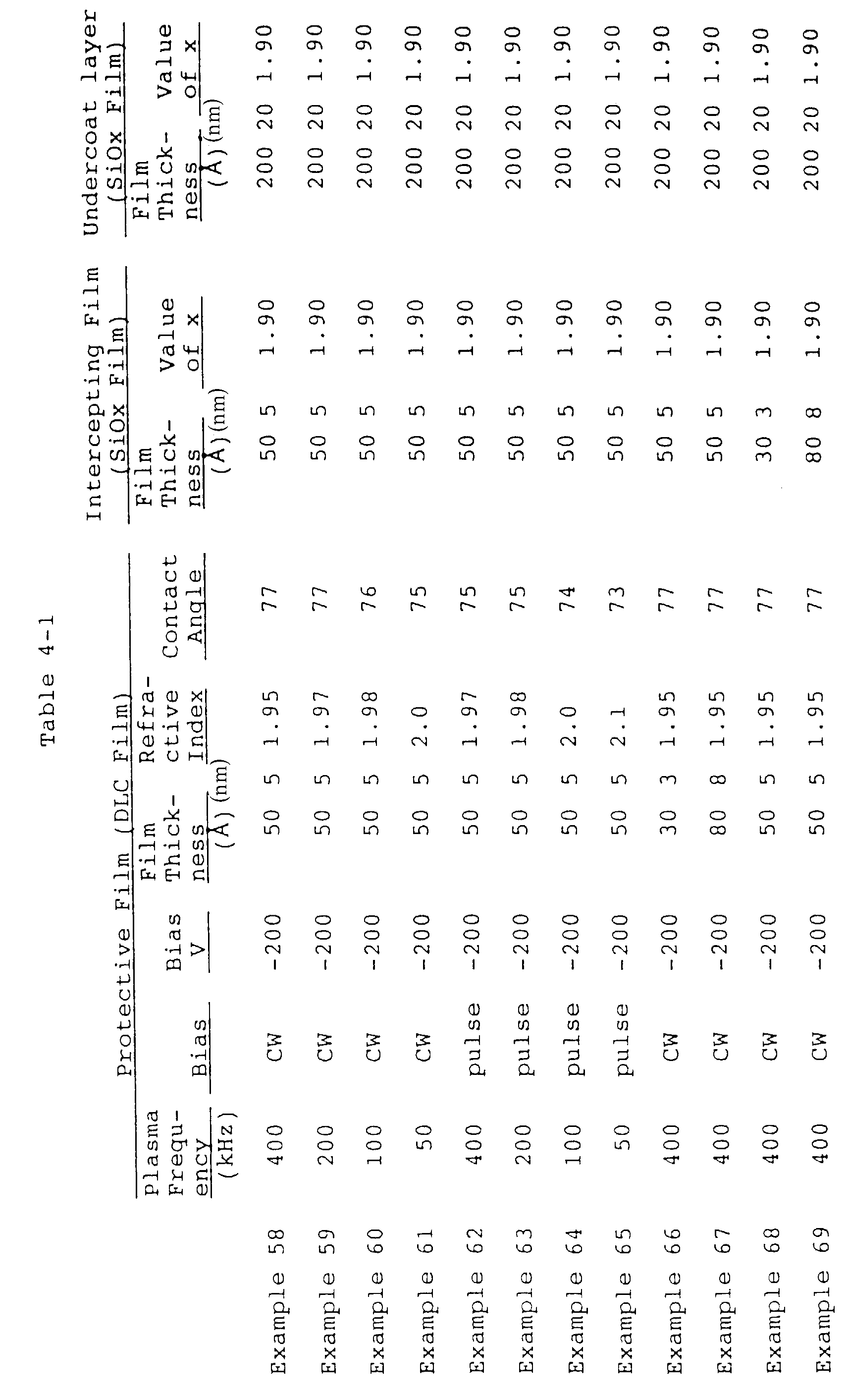

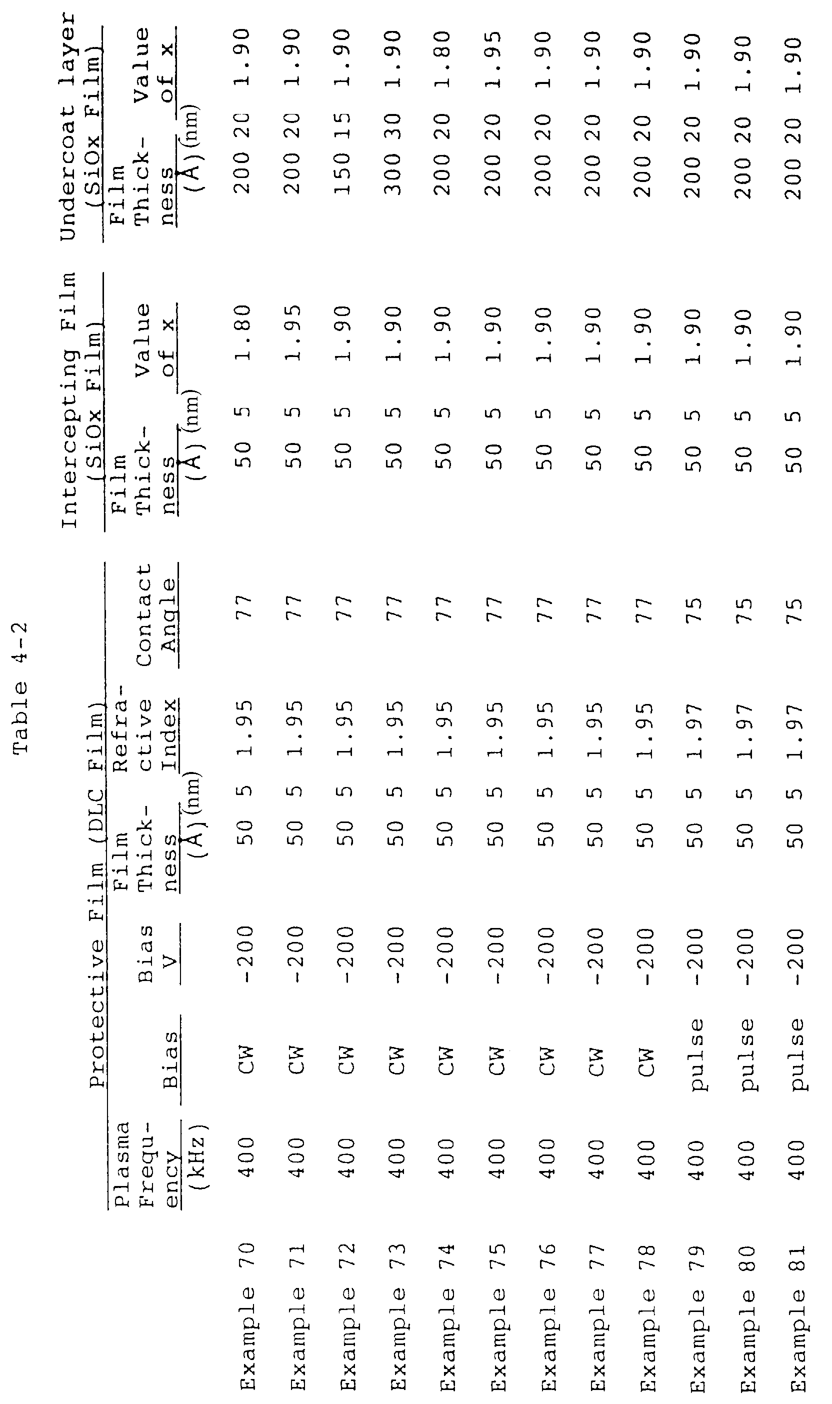

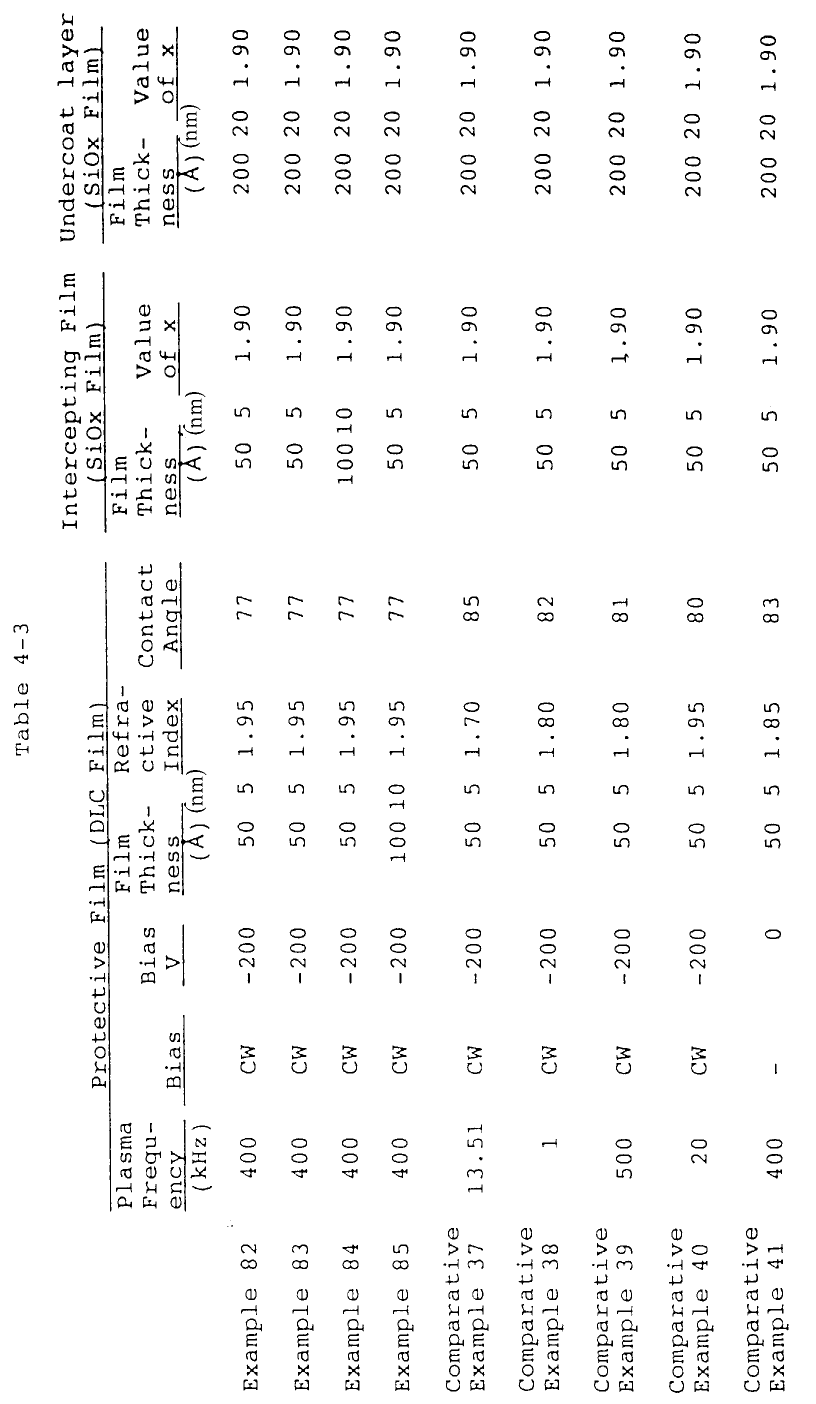

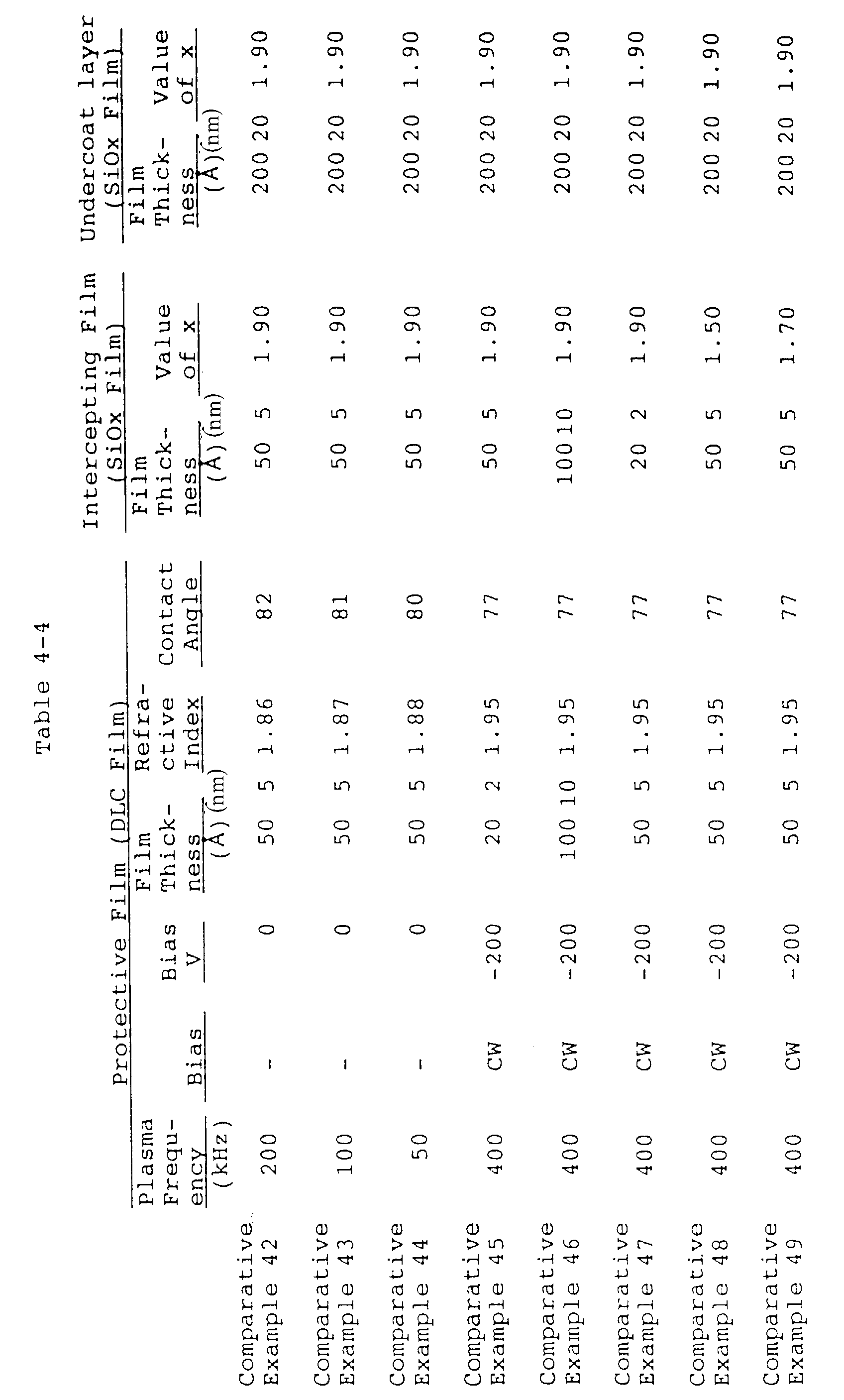

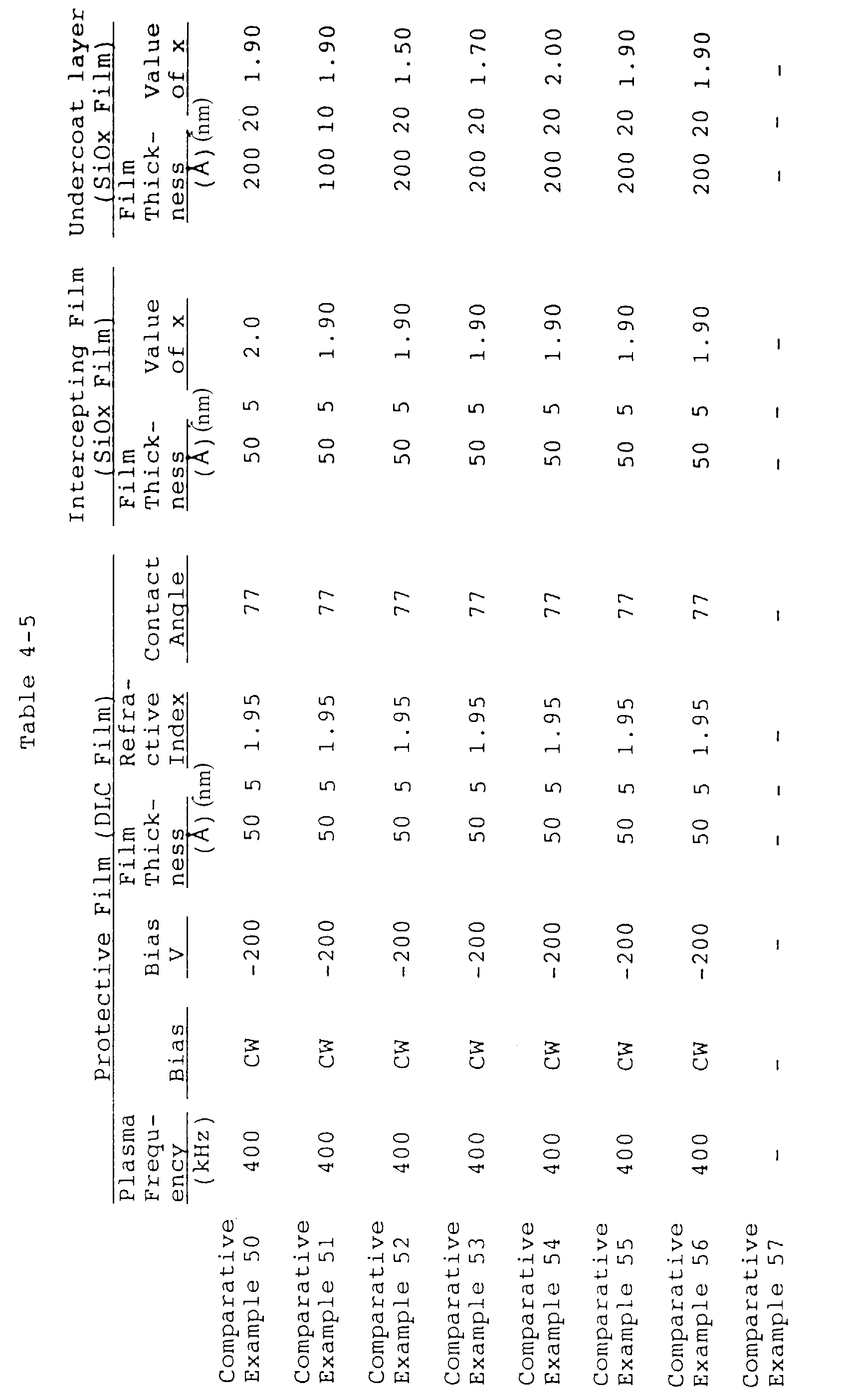

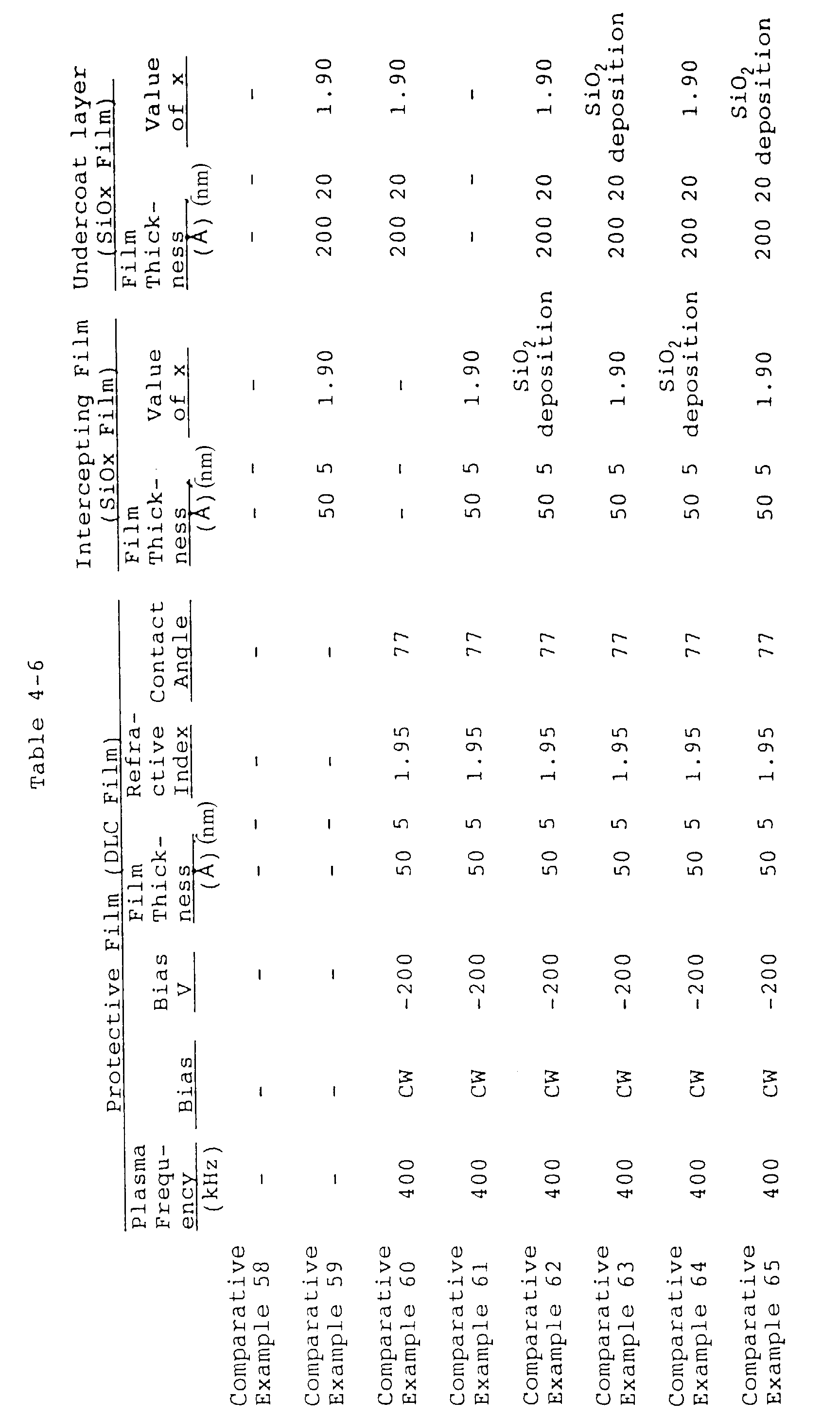

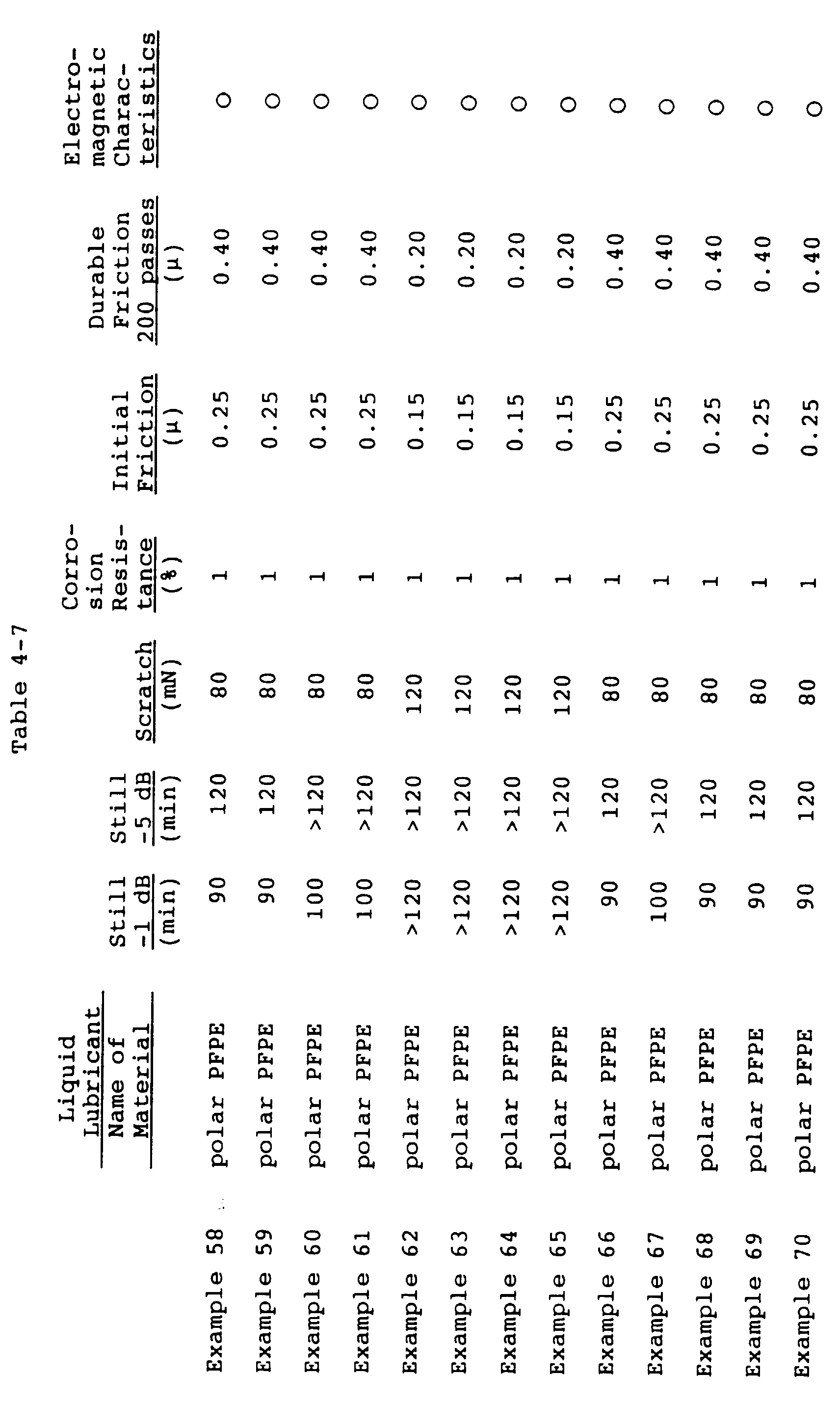

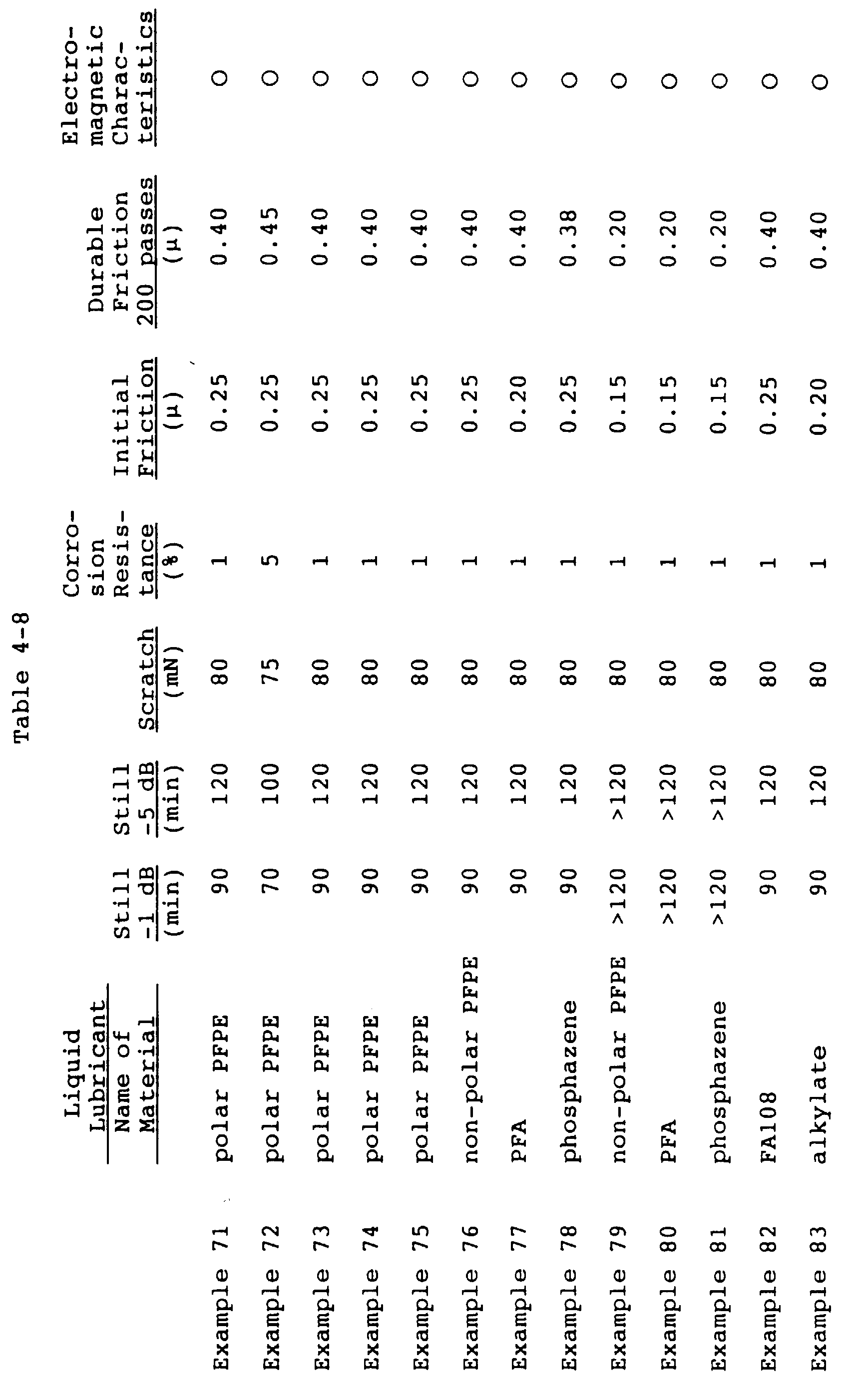

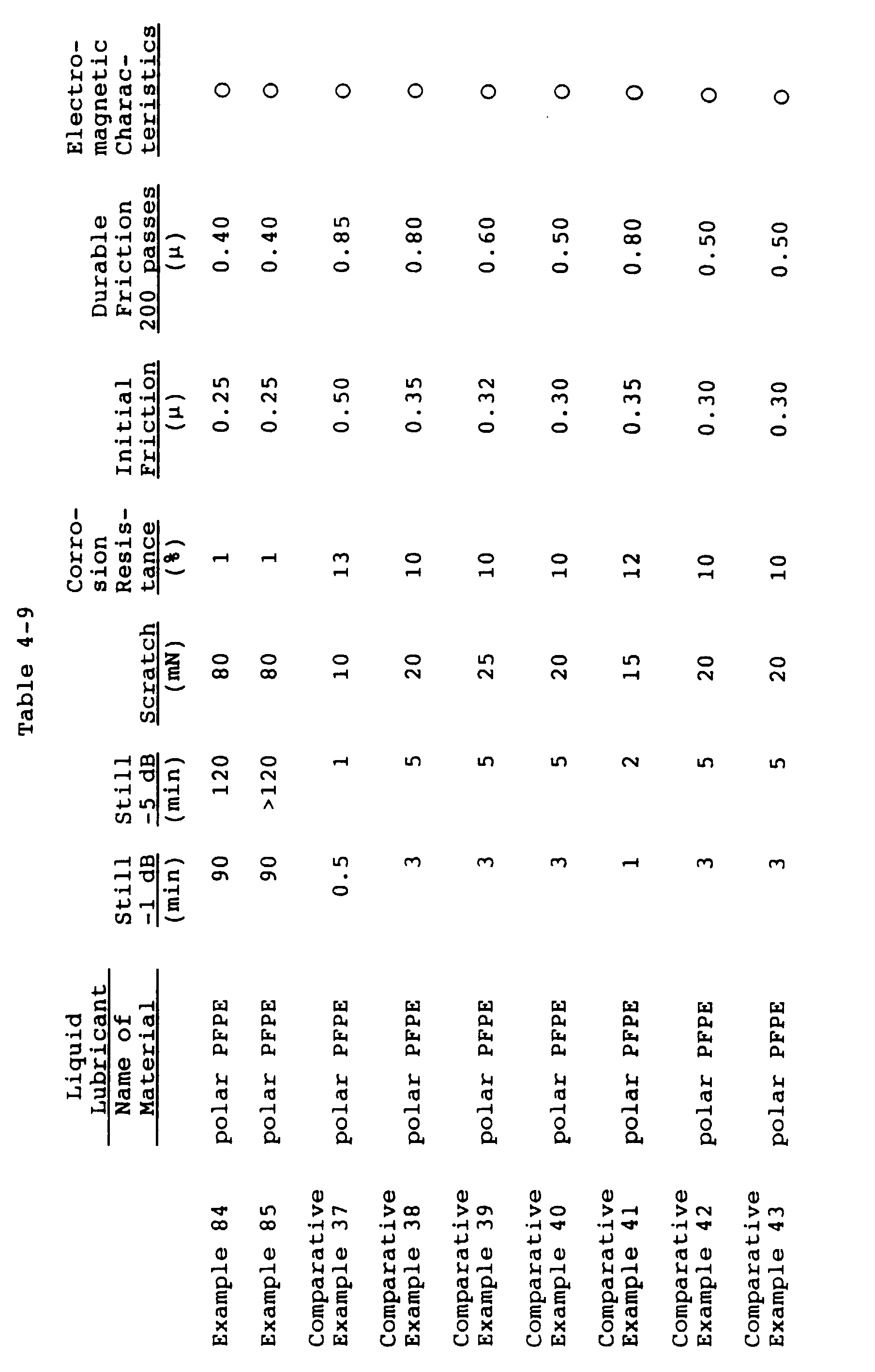

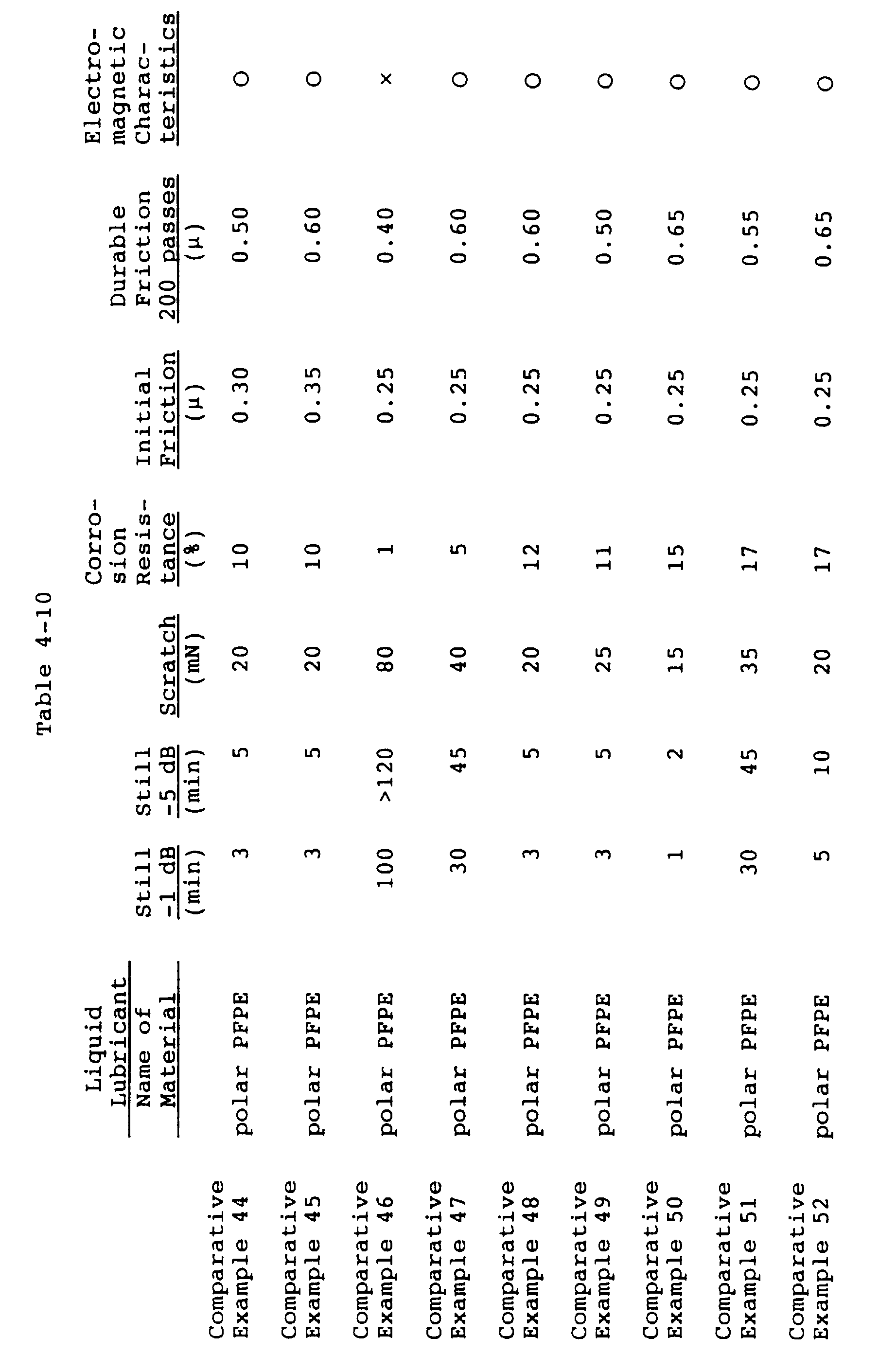

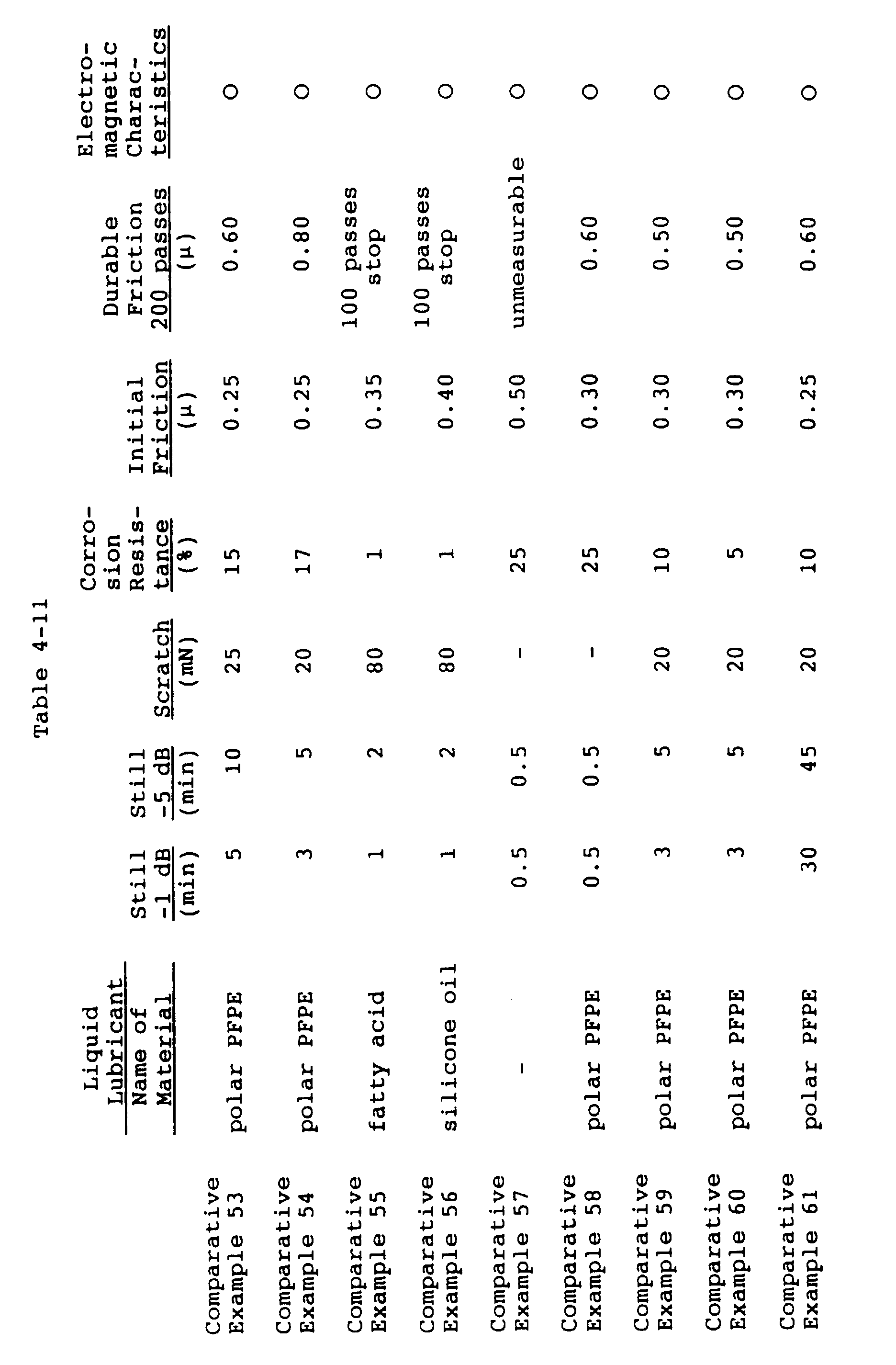

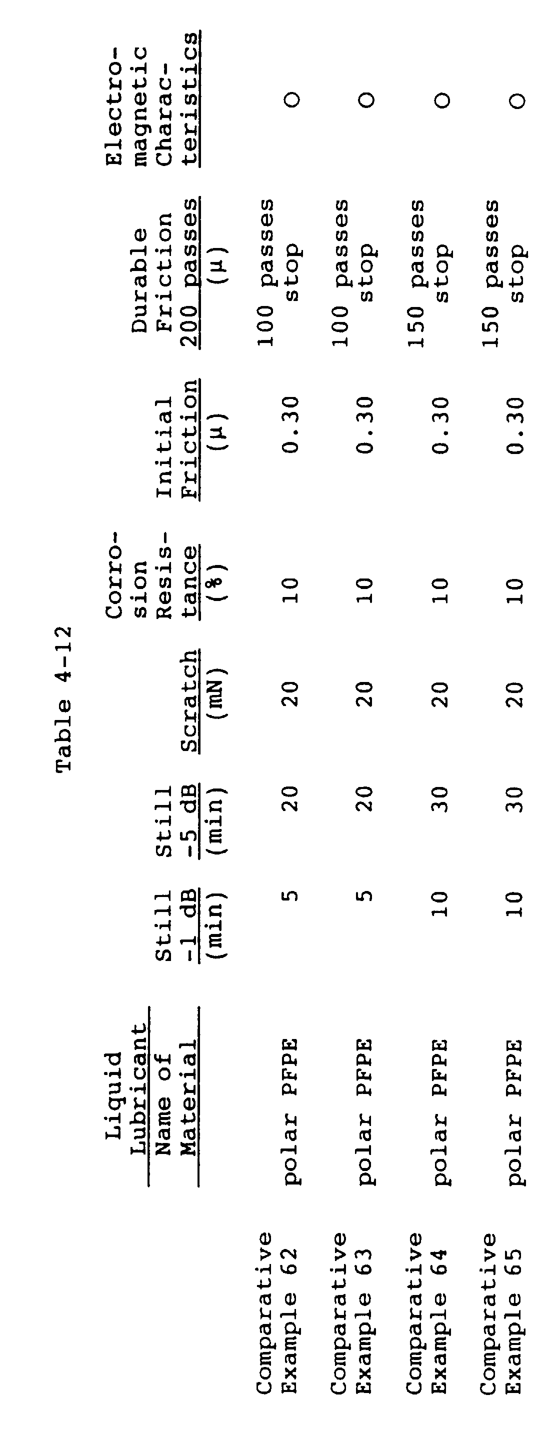

### Examples 86 to 107

SiOx (x = 1.900) was plasma polymerized using a mixture of tetramethoxysilane and oxygen at a discharge frequency of 400 kHz to form an undercoat layer on a polyethylene terephthalate film substrate having a thickness of 71 µm, and an alloy containing 80% by weight of Co and 20% by weight of Ni was deposited thereon under an oxygen atmosphere to form a ferromagnetic metal layer (with a film thickness of 150 nm (1,500 Å)). Then, SiOx (x = 1.900) was plasma polymerized to form an intercepting layer, and each of the various hydrocarbons shown in Tables 5-1 and 5-2 was plasma polymerized thereon to form a protective layer. Further, using a polar perfluoropolyether (PFPE) as a liquid lubricant, a lubricating layer was formed.

The film thickness of the intercepting layers, the kind of the hydrocarbons, the plasma frequency and the bias on film formation, and the film thickness, the refractive index and the contact angle of the resulting protective layers are shown in Tables 5-1 and 5-2, and the film thickness of the SiOx undercoat layers is shown in Tables 5-3 and 5-4. Further, for the resulting magnetic recording tapes, the still time, the corrosion resistance, the initial friction, the durable friction and the results of surface observation are shown in Tables 5-3 and 5-4.

The film thickness, the refractive index, the composition of SiOx and the contact angle were measured in the same manner as with Examples 38 to 61.

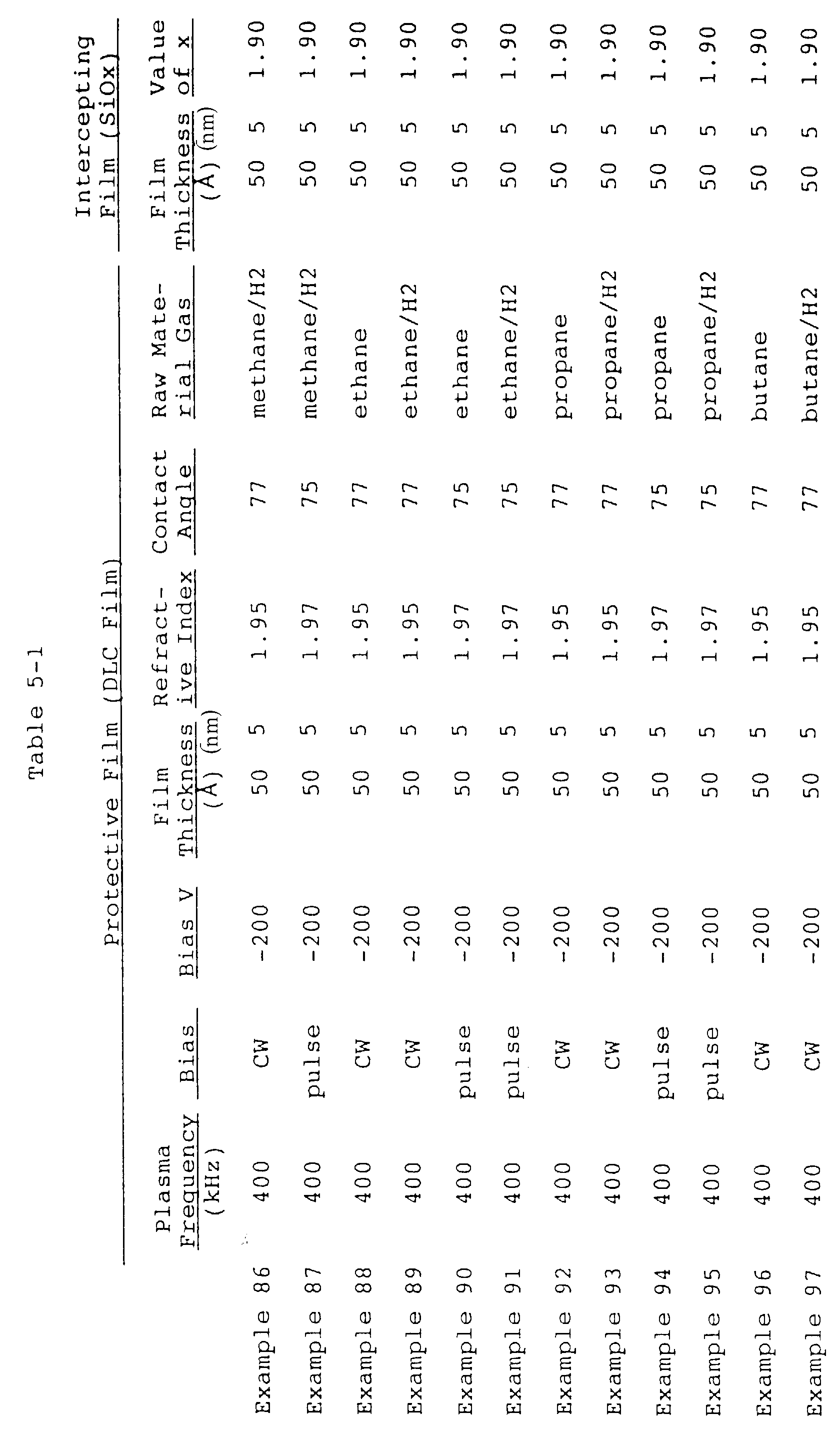

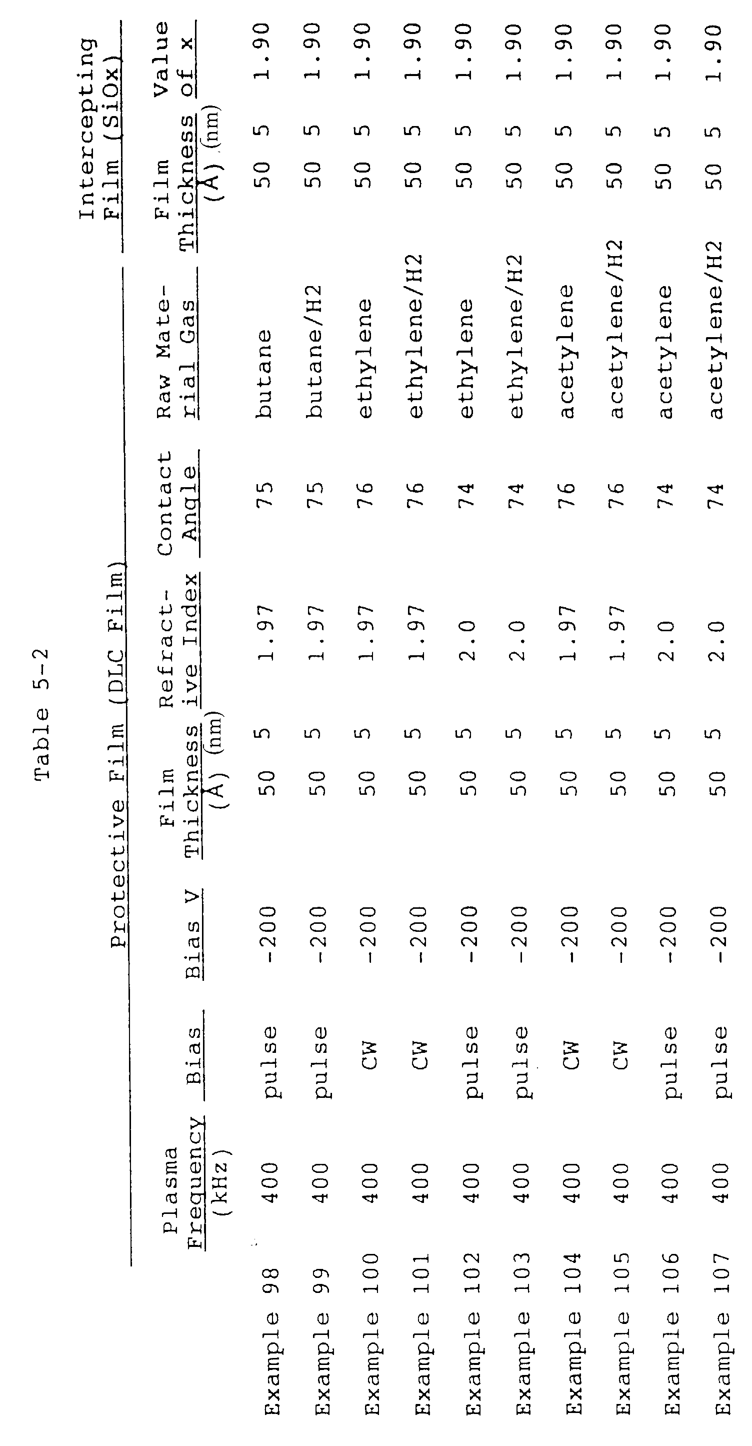

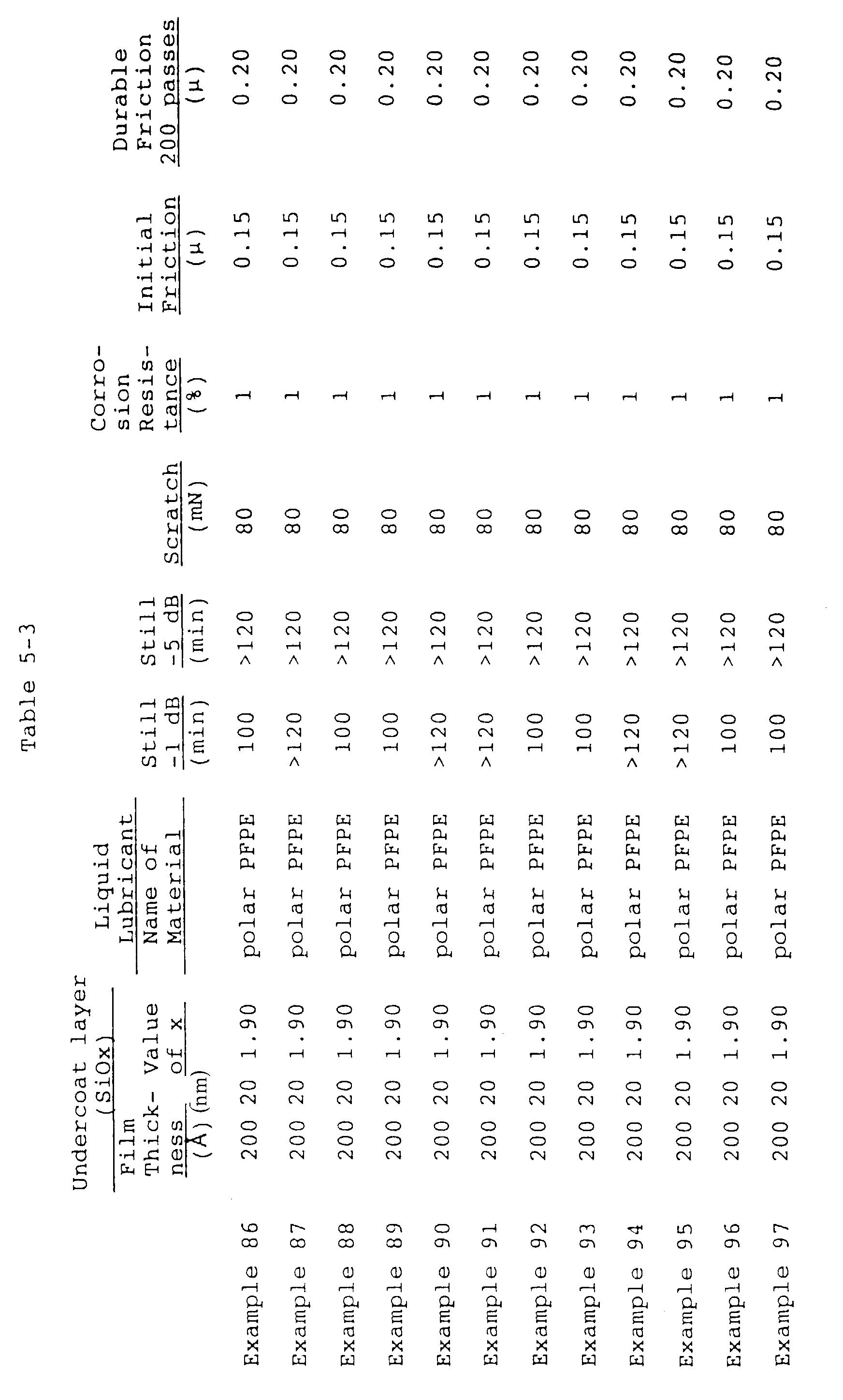

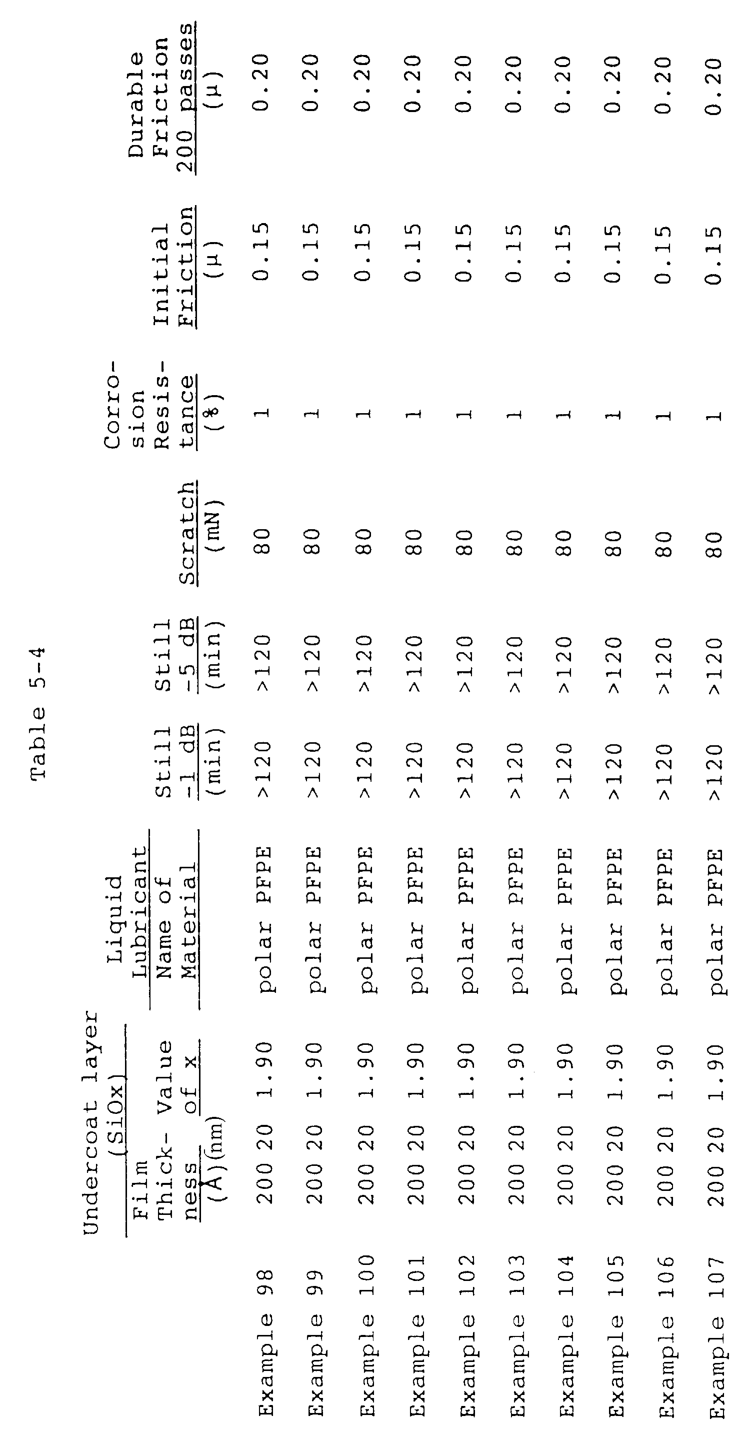

### Examples 108 to 122 and Comparative Examples 66 to 72

Magnetic recording media were produced in the same manner as with the above-mentioned examples with the exception that CW and a pulse bias were used as the negative bias, and that the pulse frequency Hz, the flow ratio of CH₄/H and the pulse ratio ON/OFF were variously changed.

The pulse ratio was changed by setting the ON/OFF time with a setting switch attached to a power supply.

Results are shown in Tables 6-1 to 6-4.

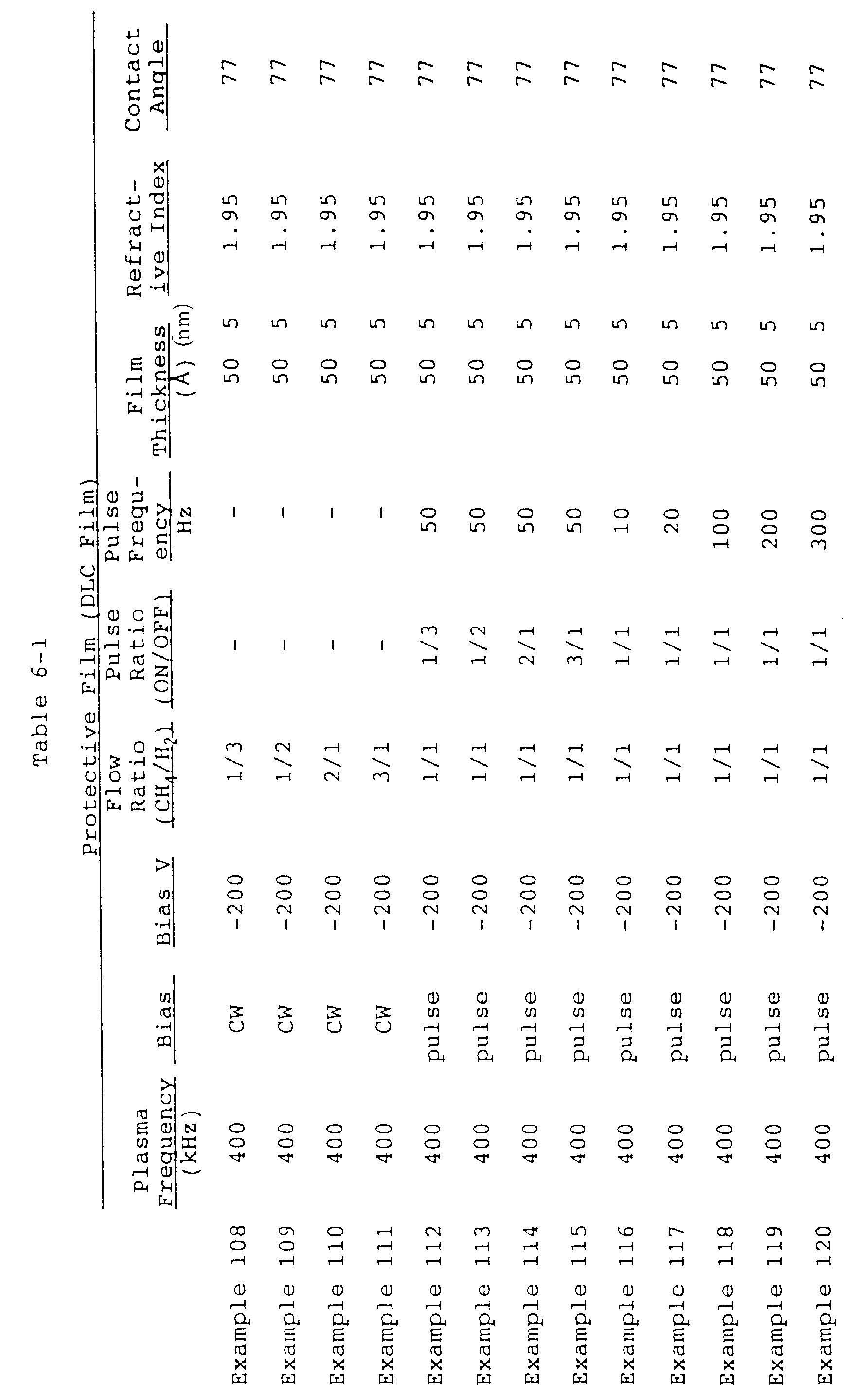

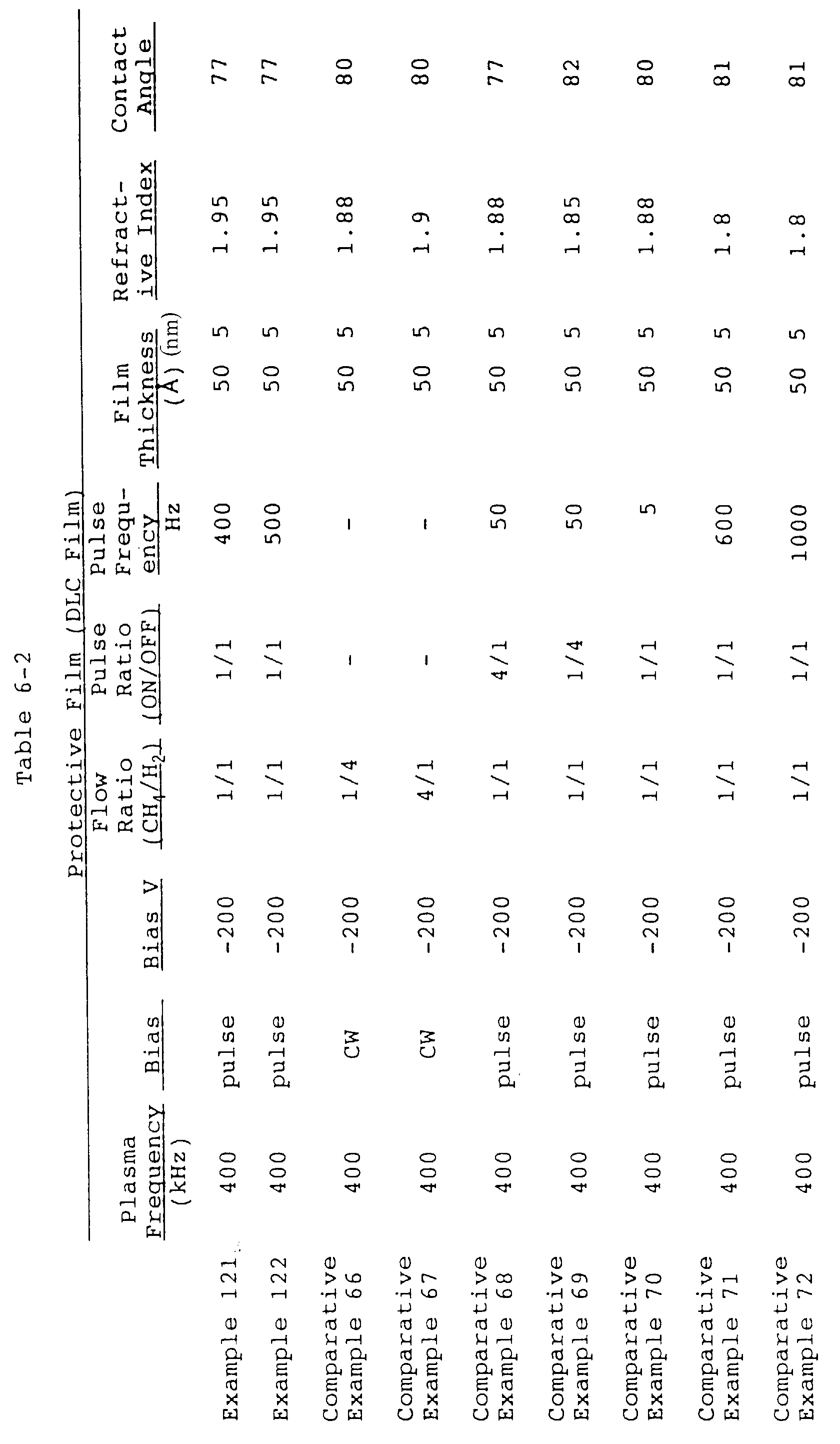

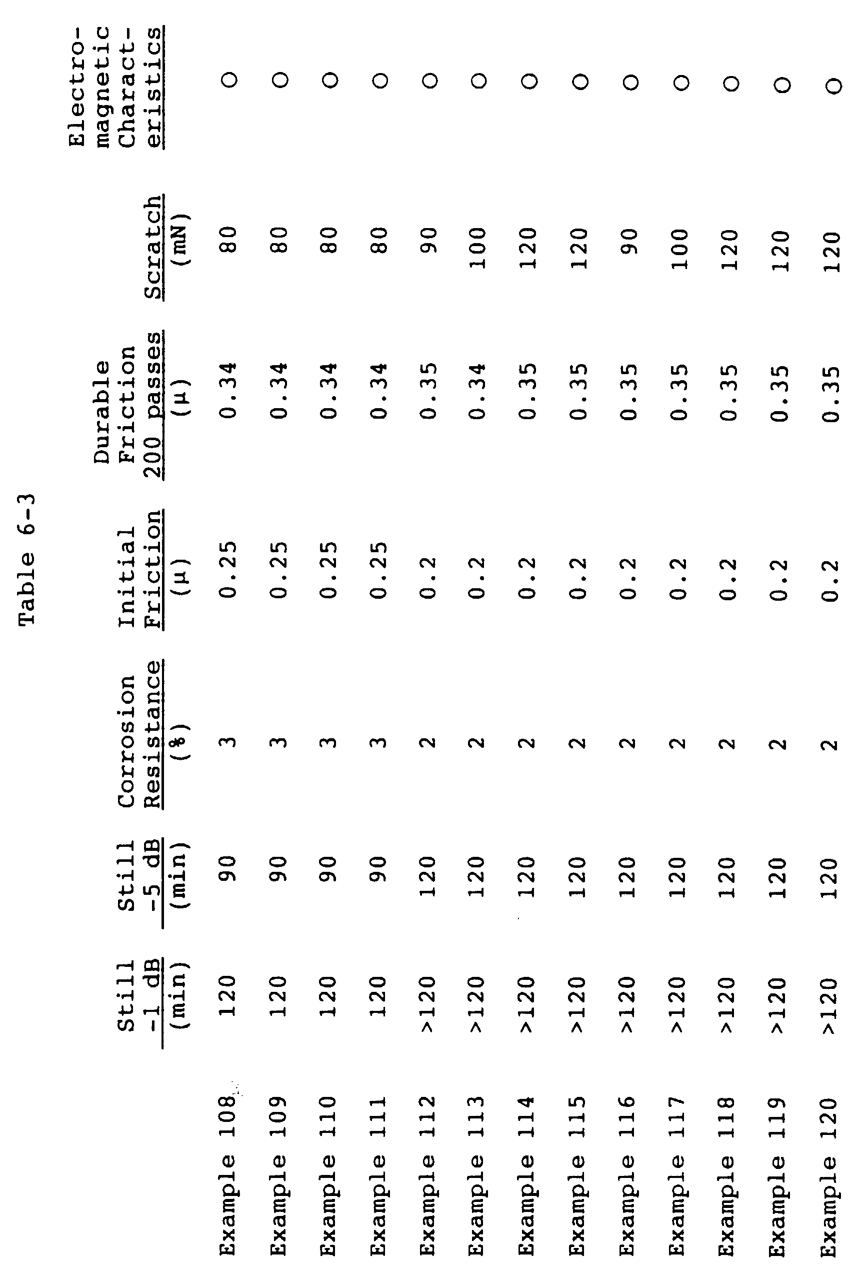

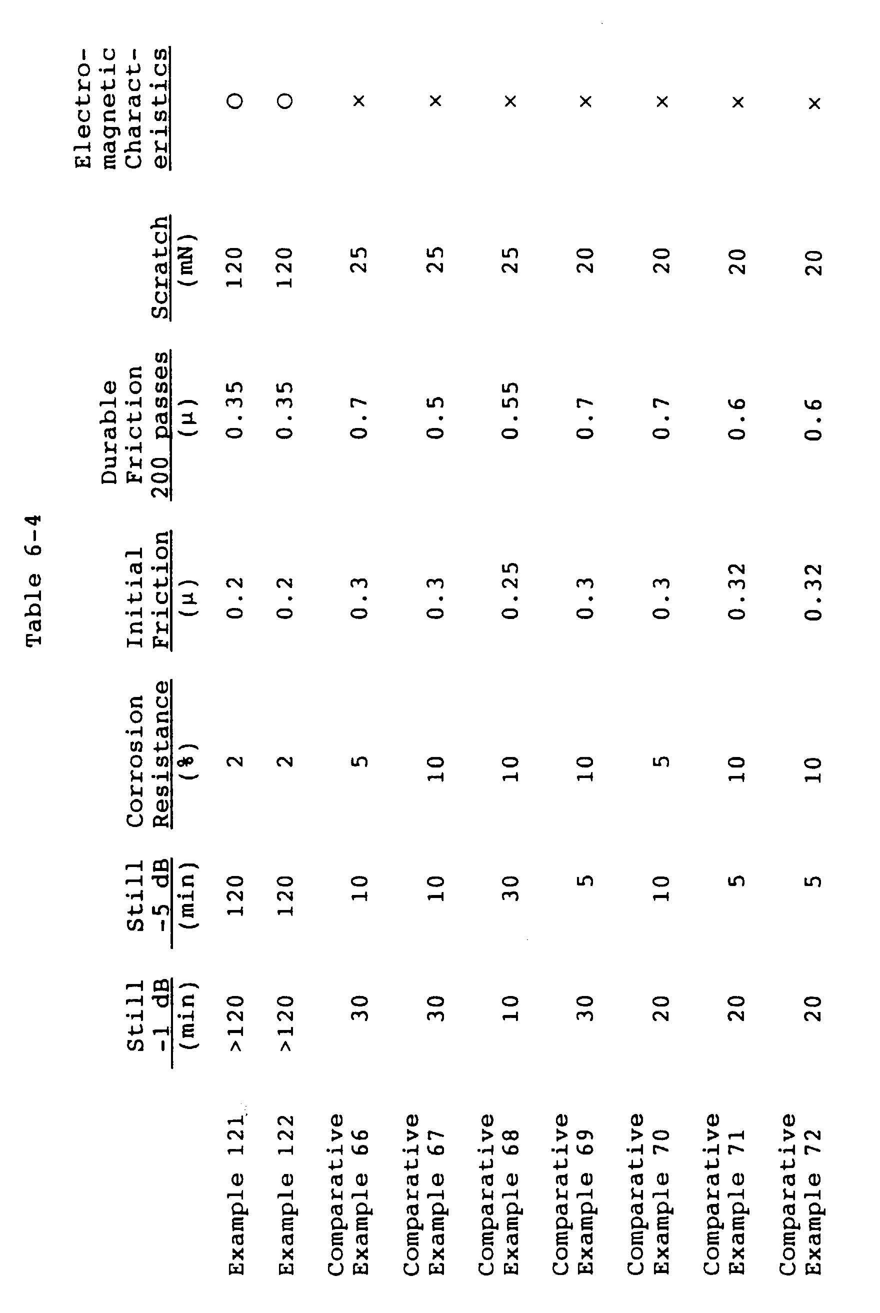

In the magnetic recording medium of the present invention having the ferromagnetic metal layer serving as the magnetic layer, the specified silicon oxide films are used as the undercoat layer and the insulating layer for the magnetic layer, the plasma-polymerized hydrogen-containing carbon film plasma polymerized under the specified applying conditions and having the specified characteristics is used as the protective layer, and the lubricating layer is formed of the specified fluorine compound, thereby providing the magnetic recording medium excellent in electromagnetic characteristics, corrosion resistance, durability, abrasion resistance and lubricity.

## Claims

1. A method for producing a magnetic recording medium comprising an undercoat layer, a ferromagnetic metal layer, a protective layer and a lubricating layer formed on a non-magnetic substrate in this order, which comprises forming an undercoat layer of silicon oxide represented by SiOx (x =1.8-1.95) on a non-magnetic substrate, forming a ferromagnetic metal layer thereon in a vapor phase, then plasma polymerizing a hydrocarbon gas and hydrogen at a frequency of 50 kHz to 450 kHz while applying a negative bias to a base side to form a protective layer of a hydrogen-containing carbon film having a refractive index of 1.90 or more, a contact angle of less than 80 degrees and a film thickness of 3 to 15 nm (30 to 150 Å), and finally forming a lubricating layer of a compound selected from the group consisting of polar perfluoropolyethers, non-polar perfluoropolyethers, perfluorocarboxylic acids, phosphazenes, perfluoroalkylates and perfluoroacrylate compounds.

2. A method for producing a magnetic recording medium comprising an undercoat layer, a ferromagnetic metal layer, an intercepting layer, a protective layer and a lubricating layer formed on a non-magnetic substrate in this order, which comprises forming an undercoat layer of silicon oxide represented by SiOx (x = 1.8-1.95) on a non-magnetic substrate, forming a ferromagnetic metal layer thereon in a vapor phase, forming an intercepting layer of a film formed of silicon oxide represented by SiOx (x = 1.8-1.95) by plasma polymerization, then plasma polymerizing a hydrocarbon gas and hydrogen at a frequency of 50 kHz to 450 kHz while applying a negative bias to a base side to form a protective layer of a hydrogen-containing carbon film having a refractive index of 1.90 or more and a contact angle of less than 80 degrees, adjusting the total film thickness of the protective layer and the intercepting layer to 3 to 15 nm (30 to 150 Å), and finally forming a lubricating layer of a compound selected from the group consisting of polar perfluoro-polyethers, non-polar perfluoropolyethers, perfluoro-carboxylic acids, phosphazenes, perfluoroalkylates and perfluoroacrylate compounds.

3. The method according to claim 1 or 2, wherein the negative bias is a pulse bias, the pulse duty factor (ON/OFF ratio) is 0.3 to 3, and the frequency is 10 Hz to 500 Hz.

4. The method according to claim 1 or 2, wherein the formation of the ferromagnetic metal layer in the vapor phase is vapor deposition.

5. A magnetic recording medium obtained by the method of claim 1.

6. A magnetic recording medium obtained by the method of claim 2.

7. The magnetic recording medium according to claim 5 or 6, wherein said ferromagnetic metal layer has been formed by vapor deposition.

## Patentansprüche

1. Verfahren zur Herstellung eines magnetischen Aufzeichnungsträgers, umfassend eine untere Überzugschicht, eine ferromagnetische Metallschicht, eine Schutzschicht und eine Gleitschicht, gebildet auf einem nicht-magnetischen Substrat in dieser Reihenfolge, das umfasst: die Bildung einer unteren Überzugschicht aus einem Siliciumoxid der Formel SiOₓ (worin x = 1,8 bis 1,95 ist) auf einem nicht-magnetischen Substrat, die Bildung einer ferromagnetischen Metallschicht hierauf in Dampfphase, die anschliessende Plasmapolymerisation eines Kohlenwasserstoffgases und von Wasserstoff bei einer Frequenz von 50 kHz bis 450 kHz, während an eine Basisseite eine negative Vorspannung angelegt wird, um eine Schutzschicht aus einem wasserstoffhaltigen Kohlenstofffilm mit einem Brechungsindex von 1,90 oder mehr, einem Kontaktwinkel von weniger als 80° und einer Filmdicke von 3 bis 15 nm (30 bis 150 Å) zu bilden, und schließlich das Bilden einer Gleitschicht aus einer Verbindung, ausgewählt aus der Gruppe, die aus polaren Perfluorpolyethern, nicht-polaren Perfluorpolyethern, Perfluorcarbonsäuren, Phosphazenen, Perfluoralkylaten und Perfluoracrylaten besteht.

2. Verfahren zur Herstellung eines magnetischen Aufzeichnungsträgers, umfassend eine untere Überzugschicht, eine ferromagnetische Metallschicht, eine Auffangschicht, eine Schutzschicht und eine Gleitschicht, gebildet auf einem nicht-magnetischen Substrat in dieser Reihenfolge, welches umfasst: das Bilden einer unteren Überzugschicht aus einem Siliciumoxid der Formel SiOₓ (x = 1,8 bis 1,95) auf einem nicht-magnetischen Substrat, das Bilden einer ferromagnetischen Schicht hierauf in Dampfphase, das Bilden einer Auffangschicht eines aus Siliciumoxid der Formel SiOₓ (x = 1,8 bis 1,95) durch Plasmapolymerisation gebildeten Films, die Plasmapolymerisation eines Kohlenwasserstoffgases und von Wasserstoff bei einer Frequenz von 50 kHz bis 450 kHz, während eine negative Vorspannung an der Basisseite angelegt wird, unter Bildung einer Schutzschicht aus einem sauerstoffhaltigen Kohlenstofffilm mit einem Brechungsindex von 1,90 oder mehr und einem Kontaktwinkel von weniger als 80°, das Einstellen der Filmgesamtdicke der Schutz- und Auffangschicht auf 3 bis 15 nm (30 bis 150 Å) und schließlich das Bilden einer Gleitschicht aus einer Verbindung, ausgewählt aus der Gruppe, die besteht aus polaren Perfluorpolyethern, nicht-polaren Perfluorpolyethern, Perfluorcarbonsäuren, Phosphazenen, Perfluoralkylaten und Perfluoracrylaten.

3. Verfahren gemäß Anspruch 1 oder 2, bei dem die negative Vorspannung eine Impulsvorspannung ist, das Tastverhältnis (EIN/AUS-Verhältnis) 0,3 bis 3 beträgt, und die Frequenz 10 Hz bis 500 Hz ist.

4. Verfahren gemäß Anspruch 1 oder 2, bei dem die Bildung der ferromagnetischen Metallschicht in Dampfphase eine Dampfphasenablagerung ist.

5. Magnetischer Aufzeichnungsträger, erhalten nach dem Verfahren gemäß Anspruch 1.

6. Magnetischer Aufzeichnungsträger, erhalten nach dem Verfahren gemäß Anspruch 2.

7. Magnetischer Aufzeichnungsträger gemäß Anspruch 5 oder 6, bei dem die ferromagnetische Metallschicht durch Dampfablagerung gebildet wurde.

## Revendications

1. Procédé de fabrication d'un support d'enregistrement magnétique comprenant une sous-couche, une couche métallique ferromagnétique, une couche protectrice et une couche lubrifiante formées sur un substrat non magnétique dans cet ordre, qui comprend la formation d'une sous-couche d'oxyde de silicium représentée par la formule SiOx (x = 1,8 à 1,95) sur un substrat non magnétique, la formation d'une couche métallique ferromagnétique sur celle-ci en phase vapeur, puis la polymérisation par plasma d'un hydrocarbure gazeux et d'hydrogène à une fréquence de 50 kHz à 450 kHz tout en appliquant une polarisation négative sur un côté de base afin de former une couche protectrice d'un film de carbone contenant de l'hydrogène présentant un indice de réfraction de 1,90 ou davantage, un angle de contact inférieur à 80 degrés et une épaisseur de film de 3 à 15 nm (30 à 150 Å), et enfin la formation d'une couche lubrifiante d'un composé sélectionné à partir du groupe constitué de perfluoropolyéthers polaires, de perfluoropolyéthers non polaires, d'acides perfluorocarboxyliques, de phosphazènes, de perfluoroalkylates et de composés de type perfluoroalkylate .

2. Procédé de fabrication d'un support d'enregistrement magnétique comprenant une sous-couche, une couche métallique ferromagnétique, une couche d'interception, une couche protectrice et une couche lubrifiante formées sur un substrat non magnétique dans cet ordre, qui comprend la formation d'une sous-couche d'oxyde de silicium représenté par la formule SiOx (x = 1,8 à 1,95) sur un substrat non magnétique, la formation d'une couche métallique ferromagnétique sur celle-ci en phase vapeur, la formation d'une couche d'interception d'un film formé d'oxyde de silicium représenté par la formule SiOx (x = 1,8 à 1,95) par polymérisation par plasma, puis la polymérisation par plasma d'un hydrocarbure gazeux et d'hydrogène à une fréquence de 50 kHz à 450 kHz tout en appliquant une polarisation négative sur un côté de base afin de former une couche protectrice d'un film de carbone contenant de l'hydrogène présentant un indice de réfraction de 1,90 ou davantage et un angle de contact inférieur à 80 degrés, l'ajustement de l'épaisseur totale de film de la couche protectrice et de la couche d'interception à 3 à 15 nm (30 à 150 Å), et enfin la formation d'une couche lubrifiante d'un composé sélectionné parmi le groupe constitué de perfluoropolyéthers polaires, de perfluoropolyéthers non polaires, d'acides perfluorocarboxyliques, de phosphazènes, de perfluoroalkylates et de composés de type perfluoroacrylate.

3. Procédé selon la revendication 1 ou 2, dans lequel la polarisation négative est une polarisation par impulsions, le rapport cyclique d'impulsion (rapport MARCHE/ARRET) est de 0,3 à 3, et la fréquence est de 10 Hz à 500 Hz.

4. Procédé selon la revendication 1 ou 2, dans lequel la formation de la couche métallique ferromagnétique en phase vapeur est un dépôt en phase vapeur.

5. Support d'enregistrement magnétique obtenu par le procédé de la revendication 1.

6. Support d'enregistrement magnétique obtenu par le procédé de la revendication 2.

7. Support d'enregistrement magnétique selon la revendication 5 ou 6, dans lequel ladite couche métallique ferromagnétique a été formée par dépôt en phase vapeur.
